(19) Europäisches Patentamt
European Patent Office
Office européen des brevets

(11) EP 1 987 074 B1

(12) **EUROPEAN PATENT SPECIFICATION**

(45) Date of publication and mention of the grant of the patent:
**19.09.2012 Bulletin 2012/38**

(21) Application number: **06839138.2**

(22) Date of filing: **06.12.2006**

(51) Int Cl.:
***C08G 18/10*** *(2006.01)* ***C08G 18/38*** *(2006.01)*
***G02B 1/04*** *(2006.01)*

(86) International application number:
**PCT/US2006/046649**

(87) International publication number:
**WO 2007/097798 (30.08.2007 Gazette 2007/35)**

(54) **HIGH IMPACT POLY (URETHANE UREA) POLYSULFIDES**

Poly(urethan-Harnstoff)-Polysulfide mit hoher Schlagfestigkeit

Polysulfures de poly(uréthane urée) à haute resistance au choc

(84) Designated Contracting States:
**FR**

(30) Priority: **22.02.2006 US 360011**

(43) Date of publication of application:
**05.11.2008 Bulletin 2008/45**

(73) Proprietor: **PPG Industries Ohio, Inc.**
**Cleveland, OH 44111 (US)**

(72) Inventors:
- **BOJKOVA, Nina, V.**
  **Monroeville, PA 15146 (US)**
- **SMITH, Robert, A.**
  **Murrysville, PA 15668 (US)**
- **HEROLD, Robert, D.**
  **Monroeville, PA 15146 (US)**
- **RAO, Chandra, B.**
  **Valencia, CA 91355 (US)**
- **MCDONALD, William, H.**
  **Westmoreland County (US)**
- **NAGPAL, Vidhu, J.**
  **Murrysville, PA 15618 (US)**
- **GRAHAM, Marvin, J.**
  **Monroeville, PA 15146 (US)**
- **YU, Phillip, C.**
  **Murrysville, 15618 (US)**
- **SAWANT, Suresh**
  **Stevenson Ranch, CA 91381 (US)**
- **OKOROAFOR, Michael, O.**
  **Roswell, GA 30075 (US)**

(74) Representative: **Polypatent**
**Braunsberger Feld 29**
**51429 Bergisch Gladbach (DE)**

(56) References cited:
**WO-A-01/36508**
**WO-A-03/011925**
**WO-A-03/042270**
**WO-A-03/044070**
**WO-A-2004/060951**
**WO-A-2006/130339**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 987 074 B1

## Description

The present invention relates to sulfur-containing polyureaurethanes and methods for their preparation.

A number of organic polymeric materials, such as plastics, have been developed as alternatives and replacements for glass in applications such as optical lenses, fiber optics, windows and automotive, nautical and aviation transparencies. These polymeric materials can provide advantages relative to glass, including, shatter resistance, lighter weight for a given application, ease of molding and ease of dying. However, the refractive indices of many polymeric materials are generally lower than that of glass. In ophthalmic applications, the use of a polymeric material having a lower refractive index will require a thicker lens relative to a material having a higher refractive index. A thicker lens is not desirable.

Thus, there is a need in the art to develop a polymeric material having an adequate refractive index and good impact resistance/strength.

The present invention provides a sulfur-containing polyureaurethane prepared by the reaction of:

(a) a sulfur-containing polyurethane prepolymer; and
(b) an amine-containing curing agent,

the sulfur-containing polyureaurethane having a refractive index of at least 1.57, an Abbe number of at least 32 and a density of less than 1.3 grams/cm$^3$, when at least partially cured, wherein the sulfur-containing polyurethane prepolymer comprises the reaction product of:

(a) a polyisocyanate, polyisothiocyanate, or mixture thereof; and
(b) an active hydrogen-containing material selected from polythiol and mixture of polyol and polythiol,

wherein said polythiol comprises an oligomer which is the reaction product of at least two different dienes and at least one dithiol and wherein the stoichiometric ratio of the sum of the number of equivalents of dithiol to the sum of the number of equivalents of diene is greater than 1.0 : 1.0.

Furthermore the present invention relates to a method of preparing a sulfur-containing polyureaurethane comprising:

(a) reacting polyisocyanate with sulfur-containing active hydrogen-containing material, said sulfur-containing active hydrogen-containing material selected from polythiol and mixture of polyol and polythiol, wherein said polythiol comprises an oligomer which is the reaction product of at least two different dienes and at least one dithiol and wherein the stoichiometric ratio of the sum of the number of equivalents of dithiol to the sum of the number of equivalents of diene is greater than 1.0 : 1.0 to form polyurethane prepolymer; and
(b) reacting said polyurethane prepolymer with amine-containing curing agent, wherein the polyueaurethane has a refractive index of at least 1.57, an Abbe number of at least 32 and a density of less than 1.3 grams/cm$^3$.

The sulfur-containing polyureaurethane of the present invention when at least partially cured have a refractive index of at least 1.55, or at least 1.56, or at least 1.57, or at least 1.58, or at least 1.59, or at least 1.60, or at least 1.62, or at least 1.65; an Abbe number of at least 32 and a density of at least 1.0, or at least 1.1, or less than 1.2 grams/cm$^3$, or less than 1.3 grams/cm$^3$.

As used herein and the claims, curing of a polymerizable composition refers to subjecting said composition to curing conditions such as but not limited to thermal curing, leading to the reaction of the reactive end-groups of said composition, and resulting in polymerization and formation of a solid polymerizate. When a polymerizable composition is subjected to curing conditions, following polymerization and after reaction of most of the reactive end groups occurs, the rate of reaction of the remaining unreacted reactive end groups becomes progressively slower. In a non-limiting embodiment, the polymerizable composition can be subjected to curing conditions until it is at least partially cured. The term "at least partially cured" means subjecting the polymerizable composition to curing conditions, wherein reaction of at least a portion of the reactive end-groups of said composition occurs, to form a solid polymerizate, such that said polymerizate can be demolded, and cut into test pieces, or such that it may be subjected to machining operations, including optical lens processing.

In a non-limiting embodiment, the polymerizable composition can be subjected to curing conditions, such that a substantially complete cure is attained and wherein further curing results in no significant further improvement in polymer properties, such as hardness.

As used herein and the claims, the terms "isocyanate" and "isothiocyanate" include unblocked compounds capable of forming a covalent bond with a reactive group such as a thiol, hydroxyl, or amine functional group. In alternate non-limiting embodiments, the polyisocyanate of the present invention can contain at least two functional groups chosen

from isocyanate (NCO), the polyisothiocyanate can contain at least two functional groups chosen from isothiocyanate (NCS), and the isocyanate and isothiocyanate materials can each include combinations of isocyanate and isothiocyanate functional groups.

In alternate non-limiting embodiments, the polyureaurethane of the invention when polymerized can produce a polymerizate having a refractive index of at least 1.55, or at least 1.56, or at least 1.57, or at least 1.58, or at least 1.59, or at least 1.60, or at least 1.62, or at least 1.65. In further alternate non-limiting embodiments, the polyureaurethane of the invention when polymerized can produce a polymerizate having an Abbe number of at least 32, or at least 35, or at least 38, or at least 39, or at least 40, or at least 44. The refractive index and Abbe number can be determined by methods known in the art such as American Standard Test Method (ASTM) Number D 542-00. Further, the refractive index and Abbe number can be determined using various known instruments. In a non-limiting embodiment of the present invention, the refractive index and Abbe number can be measured in accordance with ASTM D 542-00 with the following exceptions: (i) test one to two samples/specimens instead of the minimum of three specimens specified in Section 7.3; and (ii) test the samples unconditioned instead of conditioning the samples/specimens prior to testing as specified in Section 8.1. Further, in a non-limiting embodiment, an Atago, model DR-M2 Multi-Wavelength Digital Abbe Refractometer can be used to measure the refractive index and Abbe number of the samples/specimens.

In a non-limiting embodiment, the sulfur-containing polyureaurethane of the present invention is prepared by reacting polyisocyanate and/or polyisothiocyanate with active hydrogen-containing material selected from polyol, polythiol, or combination thereof, to form polyurethane prepolymer or sulfur-containing polyurethane prepolymer; and chain extending (i.e., reacting) said prepolymer with amine-containing curing agent, wherein said amine-containing curing agent optionally includes active hydrogen-containing material selected from polyol, polythiol, or combination thereof.

In alternate non-limiting embodiments, the amount of polyisocyanate and the amount of active hydrogen-containing material used to prepare isocyanate terminated polyurethane prepolymer or sulfur-containing polyurethane prepolymer can be selected such that the equivalent ratio of (NCO):(SH + OH) can be greater than 1.0:1.0, or at least 2.0:1.0, or at least 2.5:1.0, or less than 4.5:1.0, or less than 5.5:1.0; or the amount of polyisothiocyanate and the amount of active hydrogen-containing material used to prepare isothiocyanate terminated sulfur-containing polyurethane prepolymer can be selected such that the equivalent ratio of (NCS):(SH + OH) can be greater than 1.0:1.0, or at least 2.0:1.0, or at least 2.5:1.0, or less than 4.5:1.0, or less than 5.5:1.0; or the amount of a combination of polyisothiocyanate and polyisocyanate and the amount of active hydrogen-containing material used to prepare isothiocyanate/isocyanate terminated sulfur-containing polyurethane prepolymer can be selected such that the equivalent ratio of (NCS + NCO):(SH + OH) can be greater than 1.0:1.0, or at least 2.0:1.0, or at least 2.5:1.0, or less than 4.5:1.0, or less than 5.5:1.0

In a non-limiting embodiment, the amount of isocyanate terminated polyurethane prepolymer or sulfur-containing prepolymer and the amount of amine-containing curing agent used to prepare sulfur-containing polyureaurethane can be selected such that the equivalent ratio of (NH + SH + OH) : (NCO) can range from 0.80:1.0 to 1.1:1.0, or from 0.85:1.0 to 1.0:1.0, or from 0.90:1.0 to 1.0:1.0, or from 0.90:1.0 to 0.95:1.0, or from 0.95:1.0 to 1.0:1.0.

In another non-limiting embodiment, the amount of isothiocyanate or isothiocyanate/isocyanate terminated sulfur-containing polyurethane prepolymer and the amount of amine-containing curing agent used to prepare sulfur-containing polyureaurethane can be selected such that the equivalent ratio of (NH + SH + OH) : (NCO + NCS) can range from 0.80:1.0 to 1.1:1.0, or from 0.85:1.0 to 1.0:1.0, or from 0.90:1.0 to 1.0:1.0, or from 0.90:1.0 to 0.95:1.0, or from 0.95:1.0 to 1.0:1.0.

Polyisocyanates and polyisothiocyanates useful in the preparation of the polyureaurethane of the present invention are numerous and widely varied. Suitable polyisocyanates for use in the present invention can include but are not limited to polymeric and $C_2$-$C_{20}$ linear, branched, cycloaliphatic and aromatic polyisocyanates. Suitable polyisothiocyanates for use in the present invention can include but are not limited to polymeric and $C_2$-$C_{20}$ linear, branched, cyclic and aromatic polyisothiocyanates. Non-limiting examples can include polyisocyanates and polyisothiocyanates having backbone linkages chosen from urethane linkages (-NH-C(O)-O-), thiourethane linkages (-NH-C(O)-S-), thiocarbamate linkages (-NH-C(S)-O-), dithiourethane linkages (-NH-C(S)-S-) and combinations thereof.

The molecular weight of the polyisocyanate and polyisothiocyanate can vary widely. In alternate non-limiting embodiments, the number average molecular weight (Mn) of each can be at least 100 grams/mole, or at least 150 grams/mole, or less than 15,000 grams/mole, or less than 5000 grams/mole. The number average molecular weight can be determined using known methods. The number average molecular weight values recited herein and the claims were determined by gel permeation chromatography (GPC) using polystyrene standards.

Non-limiting examples of suitable polyisocyanates and polyisothiocyanates can include but are not limited to polyisocyanates having at least two isocyanate groups; polyisothiocyanates having at least two isothiocyanate groups; mixtures thereof; and combinations thereof, such as a material having isocyanate and isothiocyanate functionality.

Non-limiting examples of polyisocyanates and polyisothiocyanates can include but are not limited to those described in WO 2004/060951 A1 at paragraphs [0014] to [0035].

In further alternate non-limiting embodiments, the polyisocyanate can include meta-tetramethylxylylene diisocyanate (1,3-bis(1-isocyanato-1-methylethyl-benzene); 3-isocyanato-methyl-3,5,5,-trimethyl-cyclohexyl isocyanate;

4,4'-methylene bis(cyclohexyl isocyanate); meta-xylylene diisocyanate; and mixtures thereof.

The polyisocyanate and/or polyisothiocyanate are reacted with an active hydrogen-containing material as defined above to form a polyurethane prepolymer.

Suitable hydroxyl-containing materials for use in the present invention can include a wide variety of materials known in the art. Non-limiting examples can include but are not limited to polyether polyols, polyester polyols, polycaprolactone polyols, polycarbonate polyols, polyurethane polyols, poly vinyl alcohols, polymers containing hydroxy functional acrylates, polymers containing hydroxy functional methacrylates, polymers containing allyl alcohols and mixtures thereof.

Polyether polyols and methods for their preparation are known to one skilled in the art. Many polyether polyols of various types and molecular weight are commercially available from various manufacturers. Non-limiting examples of polyether polyols can include but are not limited to those described in WO 2004/060951 A1 at paragraphs [0038] to [0040].

Compatible mixtures of polyether polyols can also be used. As used herein, "compatible" means that two or more materials are mutually soluble in each other so as to essentially form a single phase.

A variety of polyester polyols and polycaprolactone polyols suitable for use in the present invention are known in the art. Suitable polyester polyols and polycaprolactone polyols can include but are not limited to those described in WO 2004/060951 A1 at paragraphs [0041] and [0042], respectively.

Polycarbonate polyols for use in the present invention are varied and known to one skilled in the art. Suitable polycarbonate polyols can include those described in WO 2004/060951 A1 at paragraphs [0043].

Further non-limiting examples of polyols include low molecular weight difunctional and higher functional polyols and mixtures thereof. In a non-limiting embodiment, these low molecular weight materials can have a number average molecular weight of less than 500 grams/mole. In a further non-limiting embodiment, the amount of low molecular weight material chosen can be such to avoid a high degree of cross-linking in the polyurethane. The di-functional polyols typically contain from 2 to 16, or from 2 to 6, or from 2 to 10, carbon atoms. Non-limiting examples of such difunctional polyols can include but are not limited to ethylene glycol, propylene glycol, diethylene glycol, triethylene glycol, tetraethylene glycol, dipropylene glycol, tripropylene glycol, 1,2-, 1,3- and 1,4-butanediol, 2,2,4-trimethyl-1,3-pentanediol, 2-methyl-1,3-pentanediol, 1,3- 2,4- and 1,5-pentanediol, 2,5- and 1,6-hexanediol, 2,4-heptanediol, 2-ethyl-1,3-hexanediol, 2,2-dimethyl-1,3-propanediol, 1,8-octanediol, 1,9-nonanediol, 1,10-decanediol, 1,4-cyclohexanediol, 1,4-cyclohexanedimethanol, 1,2-bis(hydroxyethyl)-cyclohexane and mixtures thereof. Non-limiting examples of trifunctional or tetrafunctional polyols can include glycerin, tetramethylolmethane, pentaerythritol, trimethylolethane, trimethylolpropane, alkoxylated polyols such as but not limited to ethoxylated trimethylolpropane, propoxylated trimethylolpropane, ethoxylated trimethylolethane; and mixtures thereof.

In alternate non-limiting embodiments, the material can have a number average molecular weight of at least 200 grams/mole, or at least 400 grams/mole, or at least 1000 grams/mole, or at least 2000 grams/mole. In alternate non-limiting embodiments, the active hydrogen-containing material can have a number average molecular weight of less than 5,000 grams/mole, or less than 10,000 grams/mole, or less than 15,000 grams/mole, or less than 20,000 grams/mole, or less than 32,000 grams/mole.

In a non-limiting embodiment, the polyol can comprise block polymers including blocks of ethylene oxide-propylene oxide and/or ethylene oxide-butylene oxide. In a non-limiting embodiment, the active hydrogen-containing material can comprise a block copolymer of the following chemical formula:

$$HO\text{-}(CHR_1CHR_2\text{-}O)_a\text{-}(CHR_3CHR_4\text{-}O)_b\text{-}(CHR_5CHR_6\text{-}O)_c\text{-}H \qquad (I'')$$

wherein $R_1$ through $R_6$ can each independently represent hydrogen or methyl; a, b, and c can each be independently an integer from 0 to 300. wherein a, b and c are chosen such that the number average molecular weight of the polyol does not exceed 32,000 grams/mole, as determined by GPC. In another non-limiting embodiment, a, b, and c can be chosen such that the number average molecular weight of the polyol does not exceed 10,000 grams/mole, as determined by GPC. In another non-limiting embodiment, a, b, and c each can be independently an integer from 1 to 300. In a non-limiting embodiment, $R_1$, $R_2$, $R_5$, and $R_6$ can be hydrogen, and $R_3$ and $R_4$ each can be independently chosen from hydrogen and methyl, with the proviso that $R_3$ and $R_4$ are different from one another. In another non-limiting embodiment, $R_3$ and $R_4$ can be hydrogen, and $R_1$ and $R_2$ each can be independently chosen from hydrogen and methyl, with the proviso that $R_1$ and $R_2$ are different from one another, and $R_5$ and $R_6$ each can be independently chosen from hydrogen and methyl, with the proviso that $R_5$ and $R_6$ are different from one another.

In further alternate non-limiting embodiments, Pluronic R, Pluronic L62D, Tetronic R or Tetronic, which are commercially available from BASF, can be used as polyol in the present invention. Non-limiting examples of suitable polyols for use in the present invention can include but are not limited to those described in WO 2004/060951 A1 at paragraphs[0050] at page 17 to page 18, line 6.

In a further non-limiting embodiment, the polyol can be a polyurethane prepolymer having two or more hydroxy

functional groups. Such polyurethane prepolymers can be prepared from any of the polyols and polyisocyanates previously described herein. In a non-limiting embodiment, the OH:NCO equivalent ratio can be chosen such that essentially no free NCO groups are produced in preparing the polyurethane prepolymer. In alternate non-limiting embodiments, the equivalent ratio of OH to NCO (i.e., isocyanate) present in the polyurethane prepolymer can be an amount of from 2.0 to less than 5.5 OH/1.0 NCO.

In alternate non-limiting embodiments, the polyurethane prepolymer can have a number average molecular weight (Mn) of less than 50,000 grams/mole, or less than 20,000 grams/mole, or less than 10,000 grams/mole, or less than 5,000 grams/mole, or greater than 1,000 grams/mole or greater than 2,000 grams/mole.

The polythiol for use in the present invention includes polythiol oligomer produced by the reaction of at least two or more different dienes with one or more dithiol; wherein the stoichiometric ratio of the sum of the number of equivalents of dithiol present to the sum of the number of equivalents of diene present is greater than 1.0 : 1.0. As used herein and the claims when referring to the dienes used in this reaction, the term "different dienes" can include the following embodiments:

at least one non-cyclic diene and at least one cyclic diene which can be selected from non-aromatic ring-containing dienes including but not limited to non-aromatic monocyclic dienes, non-aromatic polycyclic dienes or combinations thereof, and/or aromatic ring-containing dienes;

at least one aromatic ring-containing diene and at least one diene selected from the non-aromatic cyclic dienes described above;

at least one non-aromatic monocyclic diene and at least one non-aromatic polycyclic diene.

In a further non-limiting embodiment, the molar ratio of polythiol to diene in the reaction mixture can be (n+1) to (n) wherein n can represent an integer from 2 to 30.

The two or more different dienes can each be independently chosen from non-cyclic dienes, including straight chain and/or branched aliphatic non-cyclic dienes, non-aromatic ring-containing dienes, including non-aromatic ring-containing dienes wherein the double bonds can be contained within the ring or not contained within the ring or any combination thereof, and wherein said non-aromatic ring-containing dienes can contain non-aromatic monocyclic groups or non-aromatic polycyclic groups or combinations thereof; aromatic ring-containing dienes; or heterocyclic ring-containing dienes; or dienes containing any combination of such non-cyclic and/or cyclic groups, and wherein said two or more different dienes can optionally contain thioether, disulfide, polysulfide, sulfone, ester, thioester, carbonate, thiocarbonate, urethane, or thiourethane linkages, or halogen substituents, or combinations thereof; with the proviso that said dienes contain double bonds capable of undergoing reaction with SH groups of polythiol, and forming covalent C-S bonds, and two or more of said dienes are different from one another; and the one or more dithiol can each be independently chosen from dithiols containing straight chain and/or branched non-cyclic aliphatic groups, cycloaliphatic groups, aryl groups, aryl-alkyl groups, heterocyclic groups, or combinations or mixtures thereof, and wherein said one or more dithiol can each optionally contain thioether, disulfide, polysulfide, sulfone, ester, thioester, carbonate, thiocarbonate, urethane, or thiourethane linkages, or halogen substituents, or combinations thereof; and wherein the stoichiometric ratio of the sum of the number of equivalents of all dithiols present to the sum of the number of equivalents of all dienes present is greater than 1:1. In non-limiting embodiments, said ratio can be within the range of from greater than 1:1 to 3:1, or from 1.01:1 to 3:1, or from 1.01:1 to 2:1, or from 1.05:1 to 2:1, or from 1.1:1 to 1.5:1, or from 1.25:1 to 1.5:1. As used herein and in the claims, the term "number of equivalents" refers to the number of moles of a particular diene or polythiol, multiplied by the average number of thiol groups or double bond groups per molecule of said diene or polythiol, respectively.

The reaction mixture that consists of the group of two or more different dienes and the group of one or more dithiol and the corresponding number of equivalents of each diene and dithiol that is used to prepare the polythiol oligomer can be depicted as shown in Scheme I below:

**Scheme I.** $d_1D_1 + d_2D_2 + ... + d_xD_x + t_1T_1 + ... + t_yT_y \rightarrow$ polythiol oligomer;

wherein $D_1$ through $D_x$ represent two or more different dienes, x is an integer greater than or equal to 2, that represents the total number of different dienes that are present; $d_1$ through $d_x$ represent the number of equivalents of each corresponding diene; $T_1$ through Ty represent one or more dithiol; and $t_1$ through $t_y$ represent the number of equivalents of each corresponding dithiol; and y is an integer greater than or equal to 1 that represents the total number of dithiols present.

In a non-limiting embodiment, a group of two or more different dienes and the corresponding number of equivalents of each diene can be described by the term $d_1D_1$ (such as $d_1D_1$ through $d_xD_x$, as shown in Scheme I above), wherein $D_i$ represents the $i^{th}$ diene and $d_i$ represents the number of equivalents of $D_i$, i being can be an integer ranging from 1 to x, wherein x is an integer, greater than or equal to 2, that defines the total number of different dienes that are present. Furthermore, the sum of the number of equivalents of all dienes present can be represented by the term d,

defined according to Expression (I),

$$d = \sum_{i=1}^{x} d_i$$

Expression (I)

wherein i, x, and $d_i$ are as defined above.

Similarly, the group of one or more dithiol and the corresponding number of equivalents of each dithiol can be described by the term $t_jT_j$ (such as $t_1T_1$ through $t_yT_y$, as shown in Scheme I above), wherein $T_j$ represents the $j^{th}$ dithiol and $t_j$ represents the number of equivalents of the corresponding dithiol $T_j$, j being an integer ranging from 1 to y, wherein y is an integer that defines the total number of dithiols present, and y has a value greater than or equal to 1. Furthermore, the sum of the number of equivalents of all dithiols present can be represented by the term t, defined according to Expression (II),

$$t = \sum_{j=1}^{y} t_j$$

Expression (II)

wherein j, y, and $t_j$ are as defined above.

The ratio of the sum of the number of equivalents of all dithiols present to the sum of the number of equivalents of all dienes present can be characterized by the term t : d, wherein t and d are as defined above. The ratio t : d can have values greater than 1:1. In non-limiting embodiments, the ratio t : d can have values within the range of from greater than 1:1 to 3:1, or from 1.01:1 to 3:1, or from 1.01:1 to 2:1, or from 1.05:1 to 2:1, or from 1.1:1 to 1.5:1, or from 1.25:1 to 1.5:1.

As is known in the art, for a given set of dienes and dithiols, a statistical mixture of oligomer molecules with varying molecular weights are formed during the reaction in which the polythiol oligomer is prepared, where the number average molecular weight of the resulting mixture can be calculated and predicted based upon the molecular weights of the dienes and dithiols, and the relative equivalent ratio or mole ratio of the dienes and dithiols present in the reaction mixture that is used to prepare said polythiol oligomer. As is also known to those skilled in the art, the above parameters can be varied in order to adjust the number average molecular weight of the polythiol oligomer. The following is a hypothetical example: if the value of x as defined above is 2, and the value of y is 1; and $diene_1$ has a molecular weight (MW) of 100, $diene_2$ has a molecular weight of 150, dithiol has a molecular weight of 200; and $diene_1$, $diene_2$, and dithiol are present in the following molar amounts: 2 moles of $diene_1$, 4 moles of $diene_2$, and 8 moles of dithiol; then the number average molecular weight ($M_n$) of the resulting polythiol oligomer is calculated as follows:

$$M_n = \{(moles_{diene1} \times MW_{diene1}) + (moles_{diene2} \times MW_{diene2}) + (moles_{dithiol} \times MW_{dithiol})\} / m;$$

wherein m is the number of moles of the material that is present in the smallest molar amount.

$$= \{(2 \times 100) + (4 \times 150) + (8 \times 200)\} / 2$$

$$= 1200 \text{ g/mole}$$

As used herein and in the claims when referring to the group of two or more different dienes used in the preparation of the polythiol oligomer, the term "different dienes" refers to dienes that can be different from one another in various aspects. In non-limiting embodiments, the "different dienes" can be different from one another as follows: a)

non-cyclic vs. cyclic; b) aromatic ring-containing vs. non-aromatic ring-containing; or c) monocyclic non-aromatic vs. polycyclic non-aromatic ring-containing; whereby non-limiting embodiments of this invention can include the following:

a) at least one non-cyclic diene and at least one cyclic diene selected from non-aromatic ring-containing dienes, including but not limited to dienes containing non-aromatic monocyclic groups or dienes containing non-aromatic polycyclic groups, or combinations thereof, and/or aromatic ring-containing dienes; or
b) at least one aromatic ring-containing diene and at least one diene selected from non-aromatic cyclic dienes, as described above; or
c) at least one non-aromatic diene containing non-aromatic monocyclic group, and at least one non-aromatic diene containing polycyclic non-aromatic group.

In a non-limiting embodiment, the polythiol oligomer can be as depicted in Formula (AA') in Scheme II below, produced from the reaction of $Diene_1$ and $Diene_2$ with a dithiol; wherein $R_2$, $R_4$, $R_6$, and $R_7$ can be independently chosen from H, methyl, or ethyl, and $R_1$ and $R_3$ can be independently chosen from straight chain and/or branched aliphatic non-cyclic moieties, non-aromatic ring-containing moieties, including non-aromatic monocyclic moieties or non-aromatic polycyclic moieties or combinations thereof; aromatic ring-containing moieties; or heterocyclic ring-containing moieties; or moieties containing any combination of such non-cyclic and/or cyclic groups; with the proviso that $Diene_1$ and $Diene_2$ are different from one another, and contain double bonds capable of undergoing reaction with SH groups of dithiol, and forming covalent C-S bonds; and wherein $R_5$ can be chosen from divalent groups containing straight chain and/or branched non-cyclic aliphatic groups, cycloaliphatic groups, aryl groups, aryl-alkyl groups, heterocyclic groups, or combinations or mixtures thereof; and wherein $R_1$, $R_3$, and $R_5$ can optionally contain ether, thioether, disulfide, polysulfide, sulfone, ester, thioester, carbonate, thiocarbonate, urethane, or thiourethane linkages, or halogen substituents, or combinations thereof; and n is an integer ranging from 1 to 20.

Scheme II

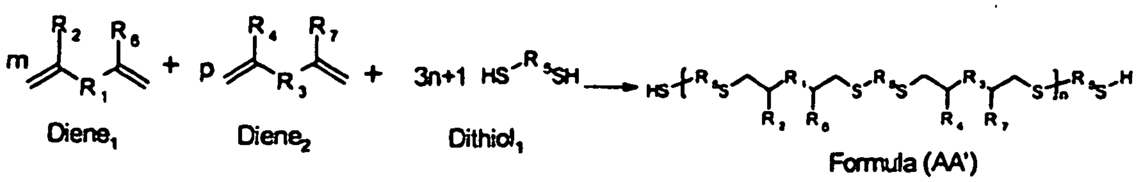

wherein $n = m + p$

In a second non-limiting embodiment, the polythiol oligomer can be as depicted in Formula (AA") in Scheme III below, produced from the reaction of $Diene_1$ and 5-vinyl-2-norbornene (VNB) with a dithiol; wherein $R_2$ and $R_4$ can be independently chosen from H, methyl, or ethyl, and $R_1$ can be chosen from straight chain and/or branched aliphatic non-cyclic moieties, non-aromatic monocyclic ring-containing moieties; aromatic ring-containing moieties; or heterocyclic ring-containing moieties; or include moieties containing any combination of such non-cyclic and/or cyclic groups; with the proviso that $Diene_1$ is different from VNB, and contains double bonds capable of reacting with SH groups of dithiol, and forming covalent C-S bonds; and wherein $R_3$ can be chosen from divalent groups containing straight chain and/or branched non-cyclic aliphatic groups, cycloaliphatic groups, aryl groups, aryl-alkyl groups, heterocyclic groups, or combinations or mixtures thereof, and wherein $R_1$ and $R_3$ can optionally contain ether, thioether, disulfide, polysulfide, sulfone, ester, thioester, carbonate, thiocarbonate, urethane, or thiourethane linkages, or halogen substituents, or combinations thereof; and n is an integer ranging from 1 to 20.

**Scheme III**

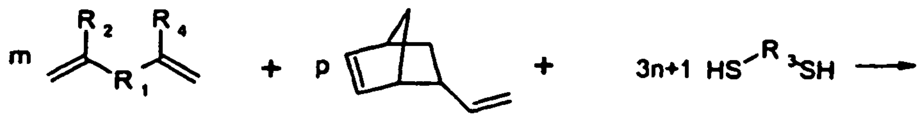

Diene$_1$ VNB Dithiol

wherein n = m + p

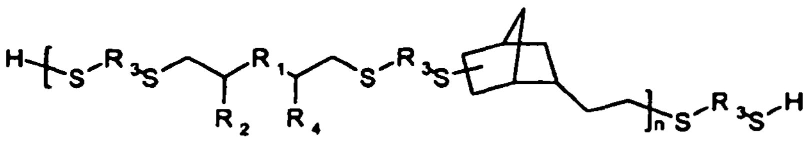

Formula (AA")

In a third non-limiting embodiment, the polythiol oligomer can be as depicted in Formula (AA"') in Scheme IV below, produced from the reaction of Diene$_1$ and 4-vinyl-1-cyclohexene (VCH) with a dithiol; wherein $R_2$ and $R_4$ can be independently chosen from H, methyl, or ethyl, and $R_1$ can be chosen from straight chain and/or branched aliphatic non-cyclic moieties, non-aromatic polycyclic ring-containing moieties; aromatic ring-containing moieties; or heterocyclic ring-containing moieties; or moieties containing any combination of such non-cyclic and/or cyclic groups; with the proviso that Diene$_1$ is different from VCH, and contains double bonds capable of reacting with SH group of dithiol, and forming covalent C-S bonds; and wherein $R_3$ can be chosen from divalent groups containing straight chain and/or branched non-cyclic aliphatic groups, cycloaliphatic groups, aryl groups, aryl-alkyl groups, heterocyclic groups, or combinations or mixtures thereof, and wherein $R_1$, and $R_3$ can optionally contain thioether, disulfide, polysulfide, sulfone, ester, thioester, carbonate, thiocarbonate, urethane, or thiourethane linkages, or halogen substituents, or combinations thereof; and n is an integer ranging from 1 to 20.

**Scheme IV**

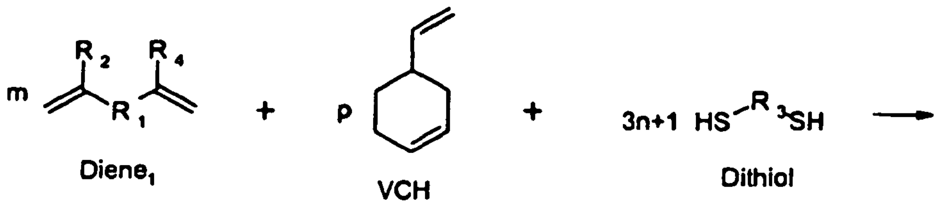

Diene$_1$ VCH Dithiol

wherein n = m + p

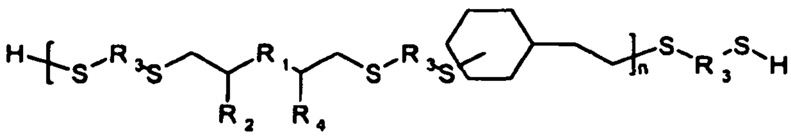

Formula (AA"')

In a further non-limiting embodiment, the polythiol for use in the present invention can include polythiol oligomer produced by the reaction of at least two or more different dienes with with at least one or more dithiol, and, optionally, one or more trifunctional or higher functional polythiol; wherein the stoichiometric ratio of the sum of the number of equivalents of polythiol present to the sum of the number of equivalents of diene present is greater than 1.0 : 1.0; and wherein the two or more different dienes can each be independently chosen from non-cyclic dienes, including straight chain and/or branched aliphatic non-cyclic dienes; non-aromatic ring-containing dienes, including non-aromatic ring-containing dienes wherein the double bonds can be contained within the ring or not contained within the ring or any combination thereof, and wherein said non-aromatic ring-containing dienes can contain non-aromatic monocyclic groups

or non-aromatic polycyclic groups or combinations thereof; aromatic ring-containing dienes; heterocyclic ring-containing dienes; or dienes containing any combination of such non-cyclic and/or cyclic groups, and wherein said two or more different dienes can optionally contain thioether, disulfide, polysulfide, sulfone, ester, thioester, carbonate, thiocarbonate, urethane, or thiourethane linkages, or halogen substituents, or combinations thereof; with the proviso that said dienes contain double bonds capable of undergoing reaction with SH groups of polythiol, and forming covalent C-S bonds, and at least two or more of said dienes are different from one another; the one or more dithiol can each be independently chosen from dithiols containing straight chain and/or branched non-cyclic aliphatic groups, cycloaliphatic groups, aryl groups, aryl-alkyl groups, heterocyclic groups, or combinations or mixtures thereof, and wherein said one or more dithiol can each optionally contain thioether, disulfide, polysulfide, sulfone, ester, thioester, carbonate, thiocarbonate, urethane, or thiourethane linkages, or halogen substituents, or combinations thereof; the trifunctional or higher functional polythiol can be chosen from polythiols containing non-cyclic aliphatic groups, cycloaliphatic groups, aryl groups, aryl-alkyl groups, heterocyclic groups, or combinations or mixtures thereof, and wherein said trifunctional or higher functional polythiol can each optionally contain thioether, disulfide, polysulfide, sulfone, ester, thioester, carbonate, thiocarbonate, urethane, or thiourethane linkages, or halogen substituents, or combinations thereof.

Suitable dithiols for use in preparing the polythiol oligomer can be selected from a wide variety known in the art. Non-limiting examples can include those disclosed herein. Further non-limiting examples of suitable dithiols for use in preparing the polythiol oligomer can include but are not limited to 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), 2-mercaptoethylsulfide (DMDS), methyl-substituted 2-mercaptoethylsulfide, dimethyl-substituted 2-mercaptoethylsulfide, 1,8-dimercapto-3,6-dioxaoctane and 1,5-dimercapto-3-oxapentane. In alternate non-limiting embodiments, the dithiol can be 2,5-dimercaptomethyl-1,4-dithiane, ethylene glycol di(2-mercaptoacetate), ethylene glycol di(3-mercaptopropionate), poly(ethylene glycol) di(2-mercaptoacetate), poly(ethylene glycol) di(3-mercaptopropionate), dipentene dimercaptan (DPDM), and mixtures thereof.

Suitable trifunctional and higher-functional polythiols for use in preparing the polythiol oligomer can be selected from a wide variety known in the art. Non-limiting examples can include those disclosed herein. Further non-limiting examples of suitable trifunctional and higher-functional polythiols for use in preparing the polythiol oligomer can include but are not limited to pentaerythritol tetrakis (2-mercaptoacetate), pentaerythritol tetrakis (3-mercaptopropionate), trimethylolpropane tris(2-mercaptoacetate), trimethylolpropane tris(3-mercaptopropionate),thioglycerol bis(2-mercaptoacetate), and mixtures thereof.

Suitable dienes for use in preparing the polythiol oligomer can vary widely and can be selected from those known in the art. Non-limiting examples of suitable dienes can include but are not limited to acyclic non-conjugated dienes, acyclic polyvinyl ethers, allyl- and vinyl-acrylates, allyl- and vinyl-methacrylates, diacrylate and dimethacrylate esters of linear diols and dithiols, diacrylate and dimethacrylate esters of poly(alkyleneglycol) diols, monocyclic aliphatic dienes, polycyclic aliphatic dienes, aromatic ring-containing dienes, diallyl and divinyl esters of aromatic ring dicarboxylic acids, and mixtures thereof.

Non-limiting examples of acyclic non-conjugated dienes can include those represented by the following general formula:

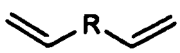

wherein R can represent $C_2$ to $C_{30}$ linear branched divalent saturated alkylene radical, or $C_2$ to $C_{30}$ divalent organic radical containing at least one element selected from the group consisting of sulfur, oxygen and silicon in addition to carbon and hydrogen atoms.

In alternate non-limiting embodiments, the acyclic non-conjugated dienes can be selected from 1,5-hexadiene, 1,6-heptadiene, 1,7-octadiene and mixtures thereof.

Non-limiting examples of suitable acyclic polyvinyl ethers can include but are not limited to those represented by structural formula (V'):

$$CH_3{=}CH{-}{-}O{-}{-}({-}{-}R^2\ {-}{-}O{-}{-})_m\ {-}{-}CH{=}CH_2 \qquad (V')$$

wherein $R^2$ can be $C_2$ to $C_6$ n-alkylene, $C_2$ to $C_6$ branched alkylene group, or $--[(CH_2\ --)_p\ --O--]_q\ --(--CH_2\ --)_r$ --, m can be a rational number from 0 to 10, p can be an integer from 2 to 6, q can be an integer from 1 to 5 and r can be an integer from 2 to 10.

In a non-limiting embodiment, m can be two (2).

Non-limiting examples of suitable polyvinyl ether monomers for use can include divinyl ether monomers, such as but not limited to ethylene glycol divinyl ether, diethylene glycol divinyl ether, triethyleneglycol divinyl ether, and

mixtures thereof.

Non-limiting examples of suitable allyl- and vinyl-acrylates and methacrylates can include but are not limited to those represented by the following formulas:

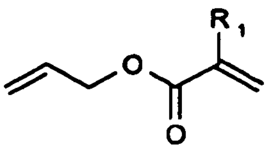
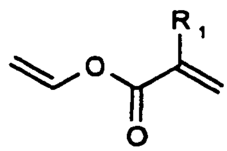

wherein $R_1$ each independently can be hydrogen or methyl.

In a non-limiting embodiment, the acrylate and methacrylate monomers can include monomers such as but not limited to allyl methacrylate, allyl acrylate and mixtures thereof.

Non-limiting examples of diacrylate and dimethacrylate esters of linear diols can include but are not limited to those represented by the following structural formula:

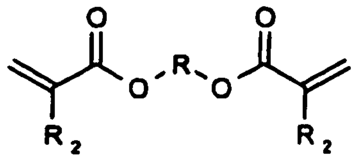

wherein R can represent $C_1$ to $C_{30}$ divalent saturated alkylene radical; branched divalent saturated alkylene radical; or $C_2$ to $C_{30}$ divalent organic radical containing at least one element selected from sulfur, oxygen and silicon in addition to carbon and hydrogen atoms; and $R_2$ can represent hydrogen or methyl.

In alternate non-limiting embodiments, the diacrylate and dimethacrylate esters of linear diols can include ethanediol dimethacrylate, 1,3-propanediol diacrylate, 1,3-propanediol dimethacrylate, 1,2-propanediol diacrylate, 1,2-propanediol dimethacrylate, 1,4-butanediol diacrylate, 1,4-butanediol dimethacrylate, 1,3-butanediol diacrylate, 1,3-butanediol dimethacrylate, 1,2-butanediol diacrylate, 1,2-butanediol dimethacrylate, and mixtures thereof.

Non-limiting examples of diacrylate and dimethacrylate esters of poly(alkyleneglycol) diols can include but are not limited to those represented by the following structural formula:

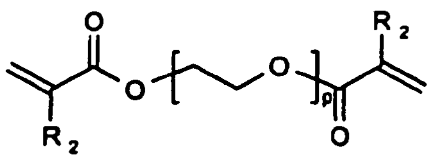

wherein $R_2$ can represent hydrogen or methyl and p can represent an integer from 1 to 5.

In alternate non-limiting embodiments, the diacrylate and dimethacrylate esters of poly(alkyleneglycol) diols can include ethylene glycol dimethacrylate, ethylene glycol diacrylate, diethylene glycol dimethacrylate, diethylene glycol diacrylate, and mixtures thereof.

Further non-limiting examples of suitable dienes can include monocyclic aliphatic dienes such as but not limited to those represented by the following structural formulas:

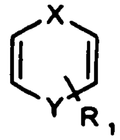

wherein X and Y each independently can represent $C_{1-10}$ divalent saturated alkylene radical; or $C_{1-5}$ divalent saturated alkylene radical, containing at least one element selected from the group of sulfur, oxygen and silicon in addition to the carbon and hydrogen atoms; and $R_1$ can represent H, or $C_1$-$C_{10}$ alkyl; and

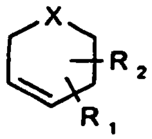

wherein X and $R_1$ can be as defined above and $R_2$ can represent $C_2$-$C_{10}$ alkenyl.

In alternate non-limiting embodiments, the monocyclic aliphatic dienes can include 1,4-cyclohexadiene, 4-vinyl-1-cyclohexene, dipentene and terpinene.

Non-limiting examples of polycyclic aliphatic dienes can include but are not limited to 5-vinyl-2-norbornene; 2,5-norbornadiene; dicyclopentadiene and mixtures thereof.

Non-limiting examples of aromatic ring-containing dienes can include but are not limited to those represented by the following structural formula:

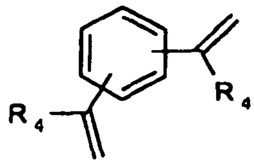

wherein $R_4$ can represent hydrogen or methyl.

In alternate non-limiting embodiments, the aromatic ring-containing dienes can include monomers such as 1,3-diispropenyl benzene, divinyl benzene and mixtures thereof.

Non-limiting examples of diallyl esters of aromatic ring dicarboxylic acids can include but are not limited to those represented by the following structural formula:

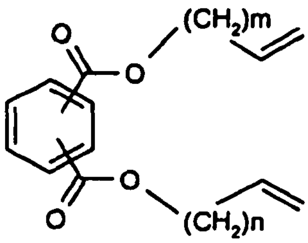

wherein m and n each independently can be an integer from 0 to 5.

In alternate non-limiting embodiments, the diallyl esters of aromatic ring dicarboxylic acids can include o-diallyl phthalate, m-diallyl phthalate, p-diallyl phthalate and mixtures thereof.

In a non-limiting embodiment, reaction of at least one polythiol with two or more different dienes can be carried out in the presence of radical initiator. Suitable radical initiators for use in the present invention can vary widely and can include those known to one of ordinary skill in the art. Non-limiting examples of radical initiators can include but are not limited to azo or peroxide type free-radical initiators such as azobisalkalenenitriles. In a non-limiting embodiment, the free-radical initiator can be azobisalkalenenitrile which is commercially available from DuPont under the trade name VAZO™. In alternate non-limiting embodiments, VAZO-52, VAZO-64, VAZO-67, VAZO-88 and mixtures thereof can be used as radical initiators.

In a non-limiting embodiment, selection of the free-radical initiator can depend on reaction temperature. In a non-limiting embodiment, the reaction temperature can vary from room temperature to 100°C. In further alternate non-limiting embodiments, Vazo 52 can be used at a temperature of from 50-60 °C, or Vazo 64 or Vazo 67 can be used at a temperature of 60 °C to 75 °C, or Vazo 88 can be used at a temperature of 75-100 °C.

The reaction of at least one polythiol and two or more different dienes can be carried out under a variety of reaction conditions. In alternate non-limiting embodiments, such conditions can depend on the degree of reactivity of the dienes and the desired structure of the resulting polythiol oligomer. In a non-limiting embodiment, polythiol, two or more different dienes and radical initiator can be combined together while heating the mixture. In a further non-limiting embodiment, polythiol and radical initiator can be combined together and added in relatively small amounts over a period of time to a mixture of two or more dienes.

In another non-limiting embodiment, two or more dienes can be combined with polythiol in a stepwise manner under radical initiation.

In another non-limiting embodiment, polythiol can be mixed with one diene and optionally free radical initiator; the diene and polythiol and optionally free radical initiator can be allowed to react and then a second diene can be added to the mixture, followed by addition of the radical initiator to the mixture. The mixture is allowed to react until the double bonds are essentially consumed and a pre-calculated (e.g., by titration based on stoichiometry) theoretical SH equivalent weight is obtained. The reaction time for completion can vary from one hour to five days depending on the reactivity of the dienes used.

In a further non-limiting embodiment, the final oligomeric product of the stepwise addition process can be a block-type copolymer

In a non-limiting embodiment, the reaction of at least one polythiol with two or more different dienes can be carried out in the presence of a catalyst. Suitable catalysts for use in the reaction can vary widely and can be selected from those known in the art. The amount of catalyst used in the reaction of the present invention can vary widely and can depend on the catalyst selected. In a non-limiting embodiment, the amount of catalyst can be present in an amount of from 0.01% by weight to 5% by weight of the reaction mixture.

In a non-limiting embodiment, wherein the mixture of dienes can be a mixture of acrylic monomers, the acrylic monomers can be reacted with polythiol in the presence of a base catalyst. Suitable base catalysts for use in this reaction vary widely and can be selected from those known in the art. Non-limiting examples can include but are not limited to tertiary amine bases such as 1,8-diazabicyclo[5.4.0]undec-7-ene (DBU) and N,N-dimethylbenzylamine. The amount of base catalyst used can vary widely. In a non-limiting embodiment, the base catalyst can be present in an amount of from 0.01 to 5.0% by weight of the reaction mixture. The reaction of the acrylic monomers with polythiol in the presence of a base catalyst can substantially minimize or essentially preclude double bond polymerization.

In another non-limiting embodiment, in order to substantially minimize or essentially preclude double bond polymerization, acrylic double bonds can be first reacted with polythiol under basic catalysis conditions and then, electron-rich reactive double bond dienes can be added to the intermediate product and reacted under radical initiation conditions. Non-limiting examples of electron-rich reactive double bond dienes can include materials such as but not limited to vinyl ethers, aliphatic dienes and cycloaliphatic dienes.

Not intending to be bound by any particular theory, it is believed that as the mixture of polythiol, dienes and radical intiator is heated, the double bonds are at least partially consumed by reaction with the SH groups of the polythiol. The mixture can be heated for a sufficient period of time such that the double bonds are essentially consumed and a pre-calculated theoretical value for SH content is reached. In a non-limiting embodiment, the mixture can be heated for a time period of from 1 hour to 5 days. In another non-limiting embodiment, the mixture can be heated at a temperature of from 40°C to 100°C. In a further non-limiting embodiment, the mixture can be heated until a theoretical value for SH content of from 0.7% to 17% is reached.

The number average molecular weight ($M_n$) of the resulting polythiol oligomer can vary widely. The number average molecular weight ($M_n$) of polythiol oligomer can be predicted based on the stoichiometry of the reaction. In alternate non-limiting embodiments, the $M_n$ of polythiol oligomer can vary from 400 to 10,000 g/mole, or from 1000 to 3000 g/mole.

The viscosity of the resulting polythiol oligomer can vary widely. In alternate non-limiting embodiments, the viscosity can be from 40 cP to 4000 cP at 73°C, or from 40 cP to 2000 cP at 73°C, or from 150 cP to 1500 cP at 73°C.

In a non-limiting embodiment, vinylcyclohexene (VCH) and 1,5-hexadiene (1,5-HD) can be combined together, and 2-mercaptoethylsulfide (DMDS) and a radical initiator (such as Vazo 52)can be mixed together, and this mixture can be added dropwise to the mixture of dienes at a rate such that a temperature of 60°C is not exceeded. After the addition is completed, the mixture can be heated to maintain a temperature of 60°C until the double bonds are essentially consumed and the pre-calculated theoretical value for SH content is reached.

In alternate non-limiting embodiments, polythiol oligomer can be prepared from the following combinations of dienes and polythiol:

(a) 5-vinyl-2-norbornene (VNB), diethylene glycol divinyl ether (DEGDVE)and DMDS;
(b) VNB, butanediol divinylether (BDDVE), DMDS;
(c) VNB, DEGDVE, BDDVE, DMDS;
(d) 1,3-diisopropenylbenzene (DIPEB), DEGDVE and DMDS;
(e) DIPEB, VNB and DMDS;
(f) DIPEB, 4-vinyl-1-cyclohexene (VCH), DMDS;
(g) allylmethacrylate (AM), VNB, and DMDS;
(h) VCH, VNB, and DMDS;
(i) Limonene(L), VNB and DMDS
(j) Ethylene glycol dimethacrylate (EGDM), VCH and DMDS;
(k) Diallylphthalate (DAP), VNB, DMDS;
(l) Divinylbenzene(DVB), VNB, DMDS; and

(m) DVB, VCH, DMDS

In an alternate non-limiting embodiment, the polythiol for use in the present invention can be polythiol oligomer prepared by reacting one or more dithiol and, optionally, one or more trifunctional or higher functional polythiol with two or more dienes, wherein said dienes can be selected such that at least one diene has refractive index of at least 1.52 and at least one other diene has Abbe number of at least 40, wherein said dienes contain double bonds capable of reacting with SH groups of polythiol, and forming covalent C-S bonds; and wherein the stoichiometric ratio of the sum of the number of equivalents of all polythiols present to the sum of the number of equivalents of all dienes present is greater than 1.0 : 1.0. In a further non-limiting embodiment, the diene with refractive index of at least 1.52 can be selected from dienes containing at least one aromatic ring, and/or dienes containing at least one sulfur-containing substituent, with the proviso that said diene has refractive index of at least 1.52; and the diene with Abbe number of at least 40 can be selected from cyclic or non-cyclic dienes not containing an aromatic ring, with the proviso that said diene has Abbe number of at least 40. In yet a further non-limiting embodiment, the diene with refractive index of at least 1.52 can be selected from diallylphthalate and 1,3-diisopropenyl benzene; and the diene with Abbe number of at least 40 can be selected from 5-vinyl-2-norbornene, 4-vinyl-1-cyclohexene, limonene, diethylene glycol divinyl ether, and allyl methacrylate.

As previously stated herein, the nature of the SH group of polythiols is such that oxidative coupling can occur readily, leading to formation of disulfide linkages. Various oxidizing agents can lead to such oxidative coupling. The oxygen in the air can in some cases lead to such oxidative coupling during storage of the polythiol. It is believed that a possible mechanism for the coupling of thiol groups involves the formation of thiyl radicals, followed by coupling of said thiyl radicals, to form disulfide linkage. It is further believed that formation of disulfide linkage can occur under conditions that can lead to the formation of thiyl radical, including but not limited to reaction conditions involving free radical initiation.

In a non-limiting embodiment, the polythiol oligomer for use in the present invention can contain disulfide linkages present in the dithiols and/or polythiols used to prepare said polythiol oligomer. In another non-limiting embodiment, the polythiol oligomer for use in the present invention can contain disulfide linkage formed during the synthesis of said polythiol oligomer. In another non-limiting embodiment, the polythiol oligomer for use in the present invention can contain disulfide linkages formed during storage of said polythiol oligomer.

In another non-limiting embodiment, polythiol for use in the present invention can include a material represented by the following structural formula and reaction scheme:

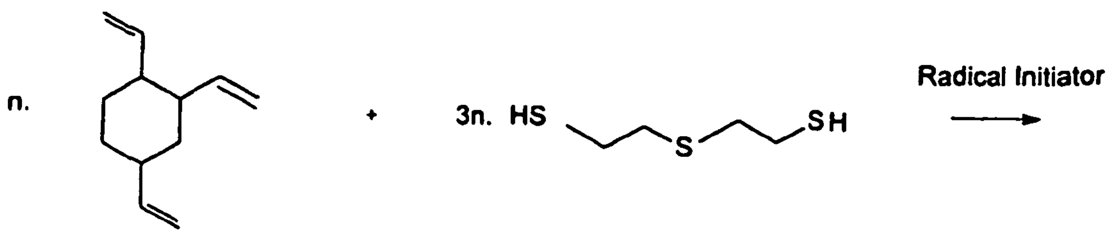


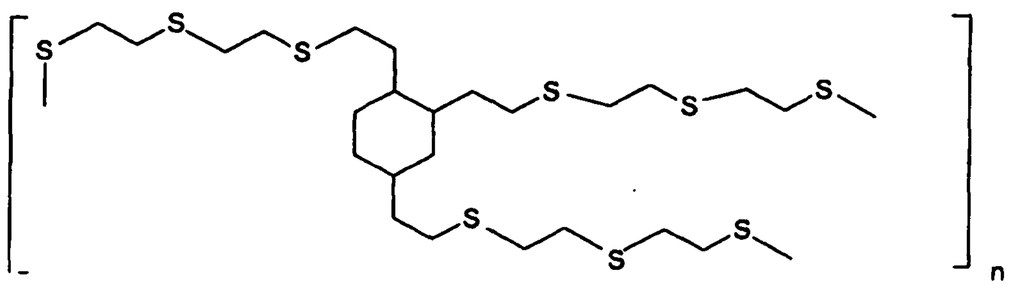

(IV'm)

where n can be an integer from 1 to 20.

In a non-limiting embodiment, the polythiol of formula (IV'm) can be prepared by reacting "n" moles of 1,2,4-trivinylcyclohexane with "3n" moles of dimercaptodiethylsulfide (DMDS), and heating the mixture in the presence of a suitable free radical initiator, such as but not limited to VAZO 64.

In another non-limiting embodiment, the polythiol for use in the present invention can include a material represented by the following structural formula:

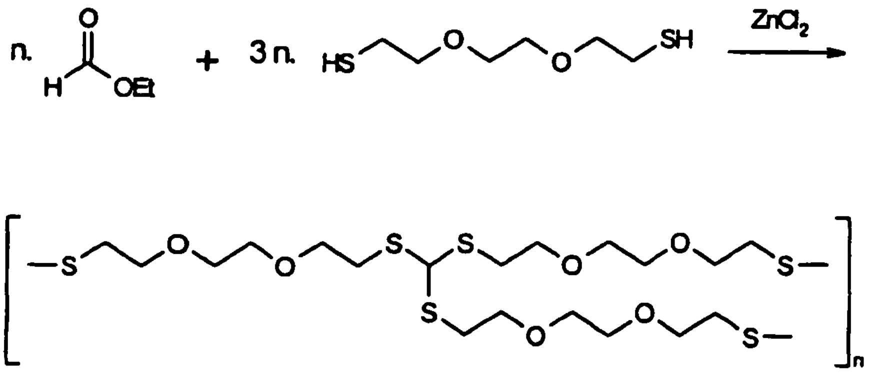


(IV'i)

wherein n can be an integer from 1 to 20.

Various methods of preparing the polythiol of the formula (IV'i) are described in detail in United States Patent 5,225,472, from column 2, line 8 to column 5, line 8.

In a non-limiting embodiment, "3n" moles of 1,8-dimercapto-3,6-dioxaooctane (DMDO) can be reacted with "n" moles of ethyl formate, as shown above, in the presence of anhydrous zinc chloride.

In alternate non-limiting embodiments, the polyols for use in the present invention can be chosen from polyether glycols and polyester glycols having a number average molecular weight of at least 200 grams/mole, or at least 300 grams/mole, or at least 750 grams/mole; or no greater than 1,500 grams/mole, or no greater than 2,500 grams/mole, or no greater than 4,000 grams/mole.

Non-limiting examples of suitable further active hydrogen-containing materials having both hydroxyl and thiol groups can include but are not limited to 2-mercaptoethanol, 3-mercapto-1,2-propanediol, glycerin bis(2-mercaptoacetate), glycerin bis(3-mercaptopropionate), 1-hydroxy-4-mercaptocyclohexane, , 1,3-dimercapto-2-propanol, 2,3-dimercapto-1-propanol, 1,2-dimercapto-1,3-butanediol, trimethylolpropane bis(2-mercaptoacetate), trimethylolpropane bis(3-mercaptopropionate), pentaerythritol mono(2-mercaptoacetate), pentaerythritol bis(2-mercaptoacetate), pentaerythritol tris(2-mercaptoacetate), pentaerythritol mono(3-mercaptopropionate), pentaerythritol bis(3-mercaptopropionate), pentaerythritol tris(3-mercaptopropionate), hydroxymethyl-tris(mercaptoethylthiomethyl)methane, , dihydroxyethyl sulfide mono(3-mercaptopropionate, and mixtures thereof.

The sulfur-containing polyureaurethane of the present invention can be prepared using a variety of techniques known in the art. In a non-limiting embodiment of the present invention, polyisocyanate, polyisothiocyanate or mixtures thereof and at least one active hydrogen-containing material can be reacted to form polyurethane prepolymer, and the polyurethane prepolymer can be reacted with an amine-containing curing agent. In a further non-limiting embodiment, the active hydrogen-containing material can include at least one material chosen from polyol, polythiol, polythiol oligomer and mixtures thereof. In still a further non-limiting embodiment, the polyurethane prepolymer can be reacted with amine-containing curing agent. In a further non-limiting embodiment, said amine-containing curing agent can comprise a combination of amine-containing material and active hydrogen-containing material chosen from polyol, polythiol, polythiol oligomer and mixtures thereof.

In a further non-limiting embodiment, said active hydrogen-containing material can further comprise material containing both hydroxyl and SH groups.

In a non-limiting embodiment, said polyurethane prepolymer can contain disulfide linkages due to disulfide linkages contained in polythiol and/or polythiol oligomer used to prepare the polyurethane prepolymer.

In further alternate non-limiting embodiments, the polyisocyanate, can include meta-tetramethylxylylene diisocyanate (1,3-bis(1-isocyanato-1-methylethyl-benzene); 3-isocyanato-methyl-3,5,5,-trimethyl-cyclohexyl isocyanate ; 4,4'-methylene bis(cyclohexyl isocyanate); meta-xylylene diisocyanate; and mixtures thereof.

Amine-containing curing agents for use in the present invention are numerous and widely varied. Non-limiting examples of suitable amine-containing curing agents can include but are not limited to those described in WO 2004/060951 A1 at paragraphs [00116] to [00125].

In another non-limiting embodiment, the amine-containing curing agent can include a combination of polyamine and material selected from polyol, polythiol, polythiol oligomer, materials containing both hydroxyl and SH groups, and mixtures thereof. Non-limiting examples of suitable polyamines, polythiols, polythiol oligomers, polyols, and/or materials containing both hydroxyl and SH groups for use in the curing agent mixture can include those previously recited herein. In a further non-limiting embodiment, the amine-containing curing agent for use in the present invention can be a combination of polyamine and polythiol and/or polythiol oligomer.

The polyureaurethane is prepared by combining polyisocyanate, polyisothiocyanate, or mixtures thereof and active hydrogen-containing material to form polyurethane prepolymer, and then introducing amine-containing curing agent, and polymerizing the resulting mixture.

In a non-limiting embodiment, the prepolymer and the amine-containing curing agent each can be degassed (e.g. under vacuum) prior to mixing them and carrying out the polymerization. The amine-containing curing agent can be mixed with the prepolymer using a variety of methods and equipment, such as but not limited to an impeller or extruder.

Suitable catalysts can be selected from those known in the art. Non-limiting examples can include but are not limited to tertiary amine catalysts or tin compounds or mixtures thereof. In alternate non-limiting embodiments, the catalysts can be dimethyl cyclohexylamine or dibutyl tin dilaurate or mixtures thereof. In further non-limiting embodiments, degassing can take place prior to or following addition of catalyst.

In another non-limiting embodiment, wherein a lens can be formed, the mixture, which can be optionally degassed, can be introduced into a mold and the mold can be heated (i.e., using a thermal cure cycle) using a variety of conventional techniques known in the art. The thermal cure cycle can vary depending on the reactivity and molar ratio of the reactants, and the presence of catalyst(s). In a non-limiting embodiment, the thermal cure cycle can include heating the mixture of polyurethane prepolymer and amine-containing curing agent, wherein said curing agent can include primary diamine or mixture of primary diamine and trifunctional or higher functional polyamine and optionally polyol and/or polythiol and/or polythiol oligomer; or heating the mixture of polyisocyanate and/or polyisothiocyanate, polyol and/or polythiol and/or polythiol oligomer, and amine-containing material; from room temperature to a temperature of 200°C over a period of from 0.5 hours to 120 hours; or from 80 to 150°C for a period of from 5 hours to 72 hours.

In a non-limiting embodiment, a urethanation catalyst can be used in the present invention to enhance the reaction of the polyurethane-forming materials. Suitable urethanation catalysts can vary; for example, suitable urethanation catalysts can include those catalysts that are useful for the formation of urethane by reaction of the NCO and OH-containing materials and/or the reaction of the NCO and SH-containing materials. Non-limiting examples of suitable catalysts can be chosen from the group of Lewis bases, Lewis acids and insertion catalysts as described in Ullmann's Encyclopedia of Industrial Chemistry, 5th Edition, 1992, Volume A21, pp. 673 to 674. In a non-limiting embodiment, the catalyst can be a stannous salt of an organic acid, such as but not limited to stannous octoate, dibutyl tin dilaurate, dibutyl tin diacetate, dibutyl tin mercaptide, dibutyl tin dimaleate, dimethyl tin diacetate, dimethyl tin dilaurate, 1,4-diazabicyclo[2.2.2]octane, and mixtures thereof. In alternate non-limiting embodiments, the catalyst can be zinc octoate, bismuth, or ferric acetylacetonate.

Further non-limiting examples of suitable catalysts can include tin compounds such as but not limited to dibutyl tin dilaurate, phosphines, tertiary ammonium salts and tertiary amines such as but not limited to triethylamine, triisopropylamine, dimethyl cyclohexylamine, N,N-dimethylbenzylamine and mixtures thereof. Such suitable tertiary amines are disclosed in United States Patent 5,693,738 at column 10, lines 6-38, the disclosure of which is incorporated herein by reference.

In non-limiting embodiments, sulfur-containing polyureaurethane of the present invention can be prepared using the various combinations of ingredients shown in Table A below:

**Table A.**

| | **Prepolymer Ingredients** | | | **Amino-containing Curing Agent Ingredients** | | |
|---|---|---|---|---|---|---|
| Embodiment # | Dithiol Oligomer | Polyol | Diisocyanates | Diamine | Dithiol Oligomers | Polythiols |
| 1 | A | -- | Des W | DETDA | A | -- |
| 2 | A | -- | Des W | DETDA | A | HITT |
| 3 | A | -- | Des W | DETDA | A | HITT, PTMA |
| 4 | B | -- | Des W | DETDA | D | -- |
| 5 | B | -- | Des W | DETDA | -- | HITT |
| 6 | B | -- | Des W | DETDA | D | HITT |
| 7 | B | TMP | Des W | DETDA | B | -- |
| 8 | B | TMP | Des W | DETDA | D | -- |
| 9 | C | -- | Des W | DETDA | D | -- |
| 10 | C | -- | Des W | DETDA | C, D | -- |
| 11 | C | -- | Des W, IPDI | DETDA | D | -- |

(continued)

| Embodiment # | Prepolymer Ingredients | | | Amino-containing Curing Agent Ingredients | | |
|---|---|---|---|---|---|---|
| | Dithiol Oligomer | Polyol | Diisocyanates | Diamine | Dithiol Oligomers | Polythiols |
| 12 | C | -- | Des W, IPDI | DETDA | C, D | -- |
| 13 | C | -- | Des W, TMXDI | DETDA | D | -- |
| 14 | C | MP | Des W, IPDI | DETDA | D | -- |
| 15 | C | MP | Des W, TMXDI | DETDA | D | -- |

A = dithiol oligomer made from DMDS + VNB + DEGDVE
B = dithiol oligomer made from DMDS + DIPEB + DEGDVE
C = dithiol oligomer made from DMDS + DIPEB + VNB
D = dithiol oligomer made from DMDS + DIPEB
VNB = 5-vinyl-2-norbornene
DEGDVE = di(ethylene glycol) divinyl ether
DIPEB = 1,3-diisopropenylbenzene
DMDS = dimercaptodiethyl sulfide
HITT = polythiol made by reacting "3n" moles DMDS with "n" moles of 1,2,4-trivinylcyclohexane (formula IV'm)
PTMA = pentaerythritol tetrakis(2-mercaptoacetate)
TMP = trimethylolpropane
Des W = 4,4'-methylene bis(cyclohexyl isocyanate)
IPDI = 3-isocyanato-methyl-3,5,5-trimethyl-cycolohexyl isocyanate
TMXDI = meta-tetramethylxylylene diisocyanate (1,3-bis(1-isocyanato-1-methylethyl-benzene))
DETDA = mixture of 2,4-diamino-3,5-diethyltoluene/2,6-diamino-3,5-diethyltoluene

In a non-limiting embodiment, wherein the sulfur-containing polyureaurethane can be prepared by introducing together a polyurethane prepolymer and an amine-containing curing agent, the polyurethane prepolymer can be reacted with at least one episulfide-containing material prior to being introduced together with amine-containing curing agent. Suitable episulfide-containing materials can vary, and can include but are not limited to materials having at least one, or two, or more episulfide functional groups. In a non-limiting embodiment, the episulfide-containing material can have two or more moieties represented by the following general formula:

(V) 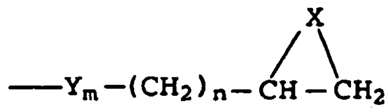

wherein X can be S or O; Y can be $C_1$ - $C_{10}$ alkyl, O, or S; m can be an integer from 0 to 2, and n can be an integer from 0 to 10. In a non-limiting embodiment, the numerical ratio of S is 50% or more, on the average, of the total amount of S and O constituting a three-membered ring.

The episulfide-containing material having two or more moieties represented by the formula (V) can be attached to an acyclic and/or cyclic skeleton. The acyclic skeleton can be branched or unbranched, and it can contain sulfide and/or ether linkages. In a non-limiting embodiment, the episulfide-containing material can be obtained by replacing the oxygen in an epoxy ring-containing acyclic material using sulfur, thiourea, thiocyanate, triphenylphosphine sulfide or other such reagents known in the art. In a further non-limiting embodiment, alkylsulfide-type episulfide-containing materials can be obtained by reacting various known acyclic polythiols with epichlorohydrin in the presence of an alkali to obtain an alkylsulfide-type epoxy material; and then replacing the oxygen in the epoxy ring as described above.

In alternate non-limiting embodiments, the cyclic skeleton can include the following materials:

(a) an episulfide-containing material wherein the cyclic skeleton can be an alicyclic skeleton,
(b) an episulfide-containing material wherein the cyclic skeleton can be an aromatic skeleton, and
(c) an episulfide-containing material wherein the cyclic skeleton can be a heterocyclic skeleton including a sulfur atom as a hetero-atom.

In further non-limiting embodiments, each of the above materials can contain a linkage of a sulfide, an ether, a sulfone, a ketone, and/or an ester.

Non-limiting examples of suitable episulfide-containing materials having an alicyclic skeleton can include but are not limited to 1,3- and 1,4-bis(β-epithiopropylthio)cyclohexane, 1,3- and 1,4-bis(β-epithiopropylthiomethyl)cyclohexane, bis[4-(β-epithiopropylthio)cyclohexyl] methane, 2,2-bis[4-(β-epithiopropylthio)cyclohexyl] propane, bis[4-(β-epithiopropylthio)cyclohexyl)sulfide, 4-vinyl-1-cyclohexene diepisulfide, 4-epithioethyl-1-cyclohexene sulfide, 4-epoxy-1,2-cyclohexene sulfide, 2,5-bis(β-epithiopropylthio)-1,4-dithiane, and 2,5-bis(β-epithiopropylthioethylthiomethyl)-1,4-dithiane.

Non-limiting examples of suitable episulfide-containing materials having an aromatic skeleton can include but are not limited to 1,3- and 1,4-bis(β-epithiopropylthio)benzene, 1,3- and 1,4-bis(β-epithiopropylthiomethyl)benzene, bis14-(β-epithiopropylthio)phenyl] methane, 2,2-bis[4-(β-epithiopropylthio)phenyl] propane, bis[4-(β-epithiopropylthio) phenyl] sulfide, bis[4-(β-epithiopropylthio)phenyl] sulfone, and 4,4-bis(β-epithiopropylthio)biphenyl.

Non-limiting examples of suitable episulfide-containing materials having a heterocyclic skeleton including the sulfur atom as the hetero-atom can include but are not limited to the materials represented by the following general formulas:

(VI) 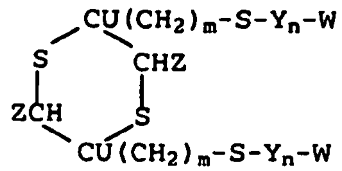

(VII) 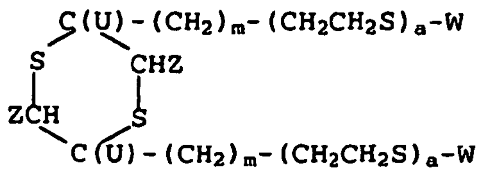

(VII') 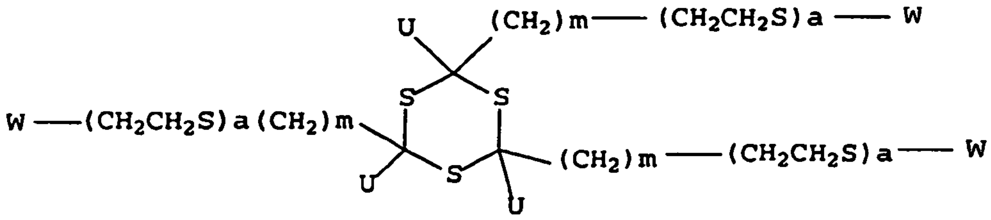

wherein m can be an integer from 1 to 5; n can be an integer from 0 to 4; a can be an integer from 0 to 5; U can be a hydrogen atom or an alkyl group having 1 to 5 carbon atoms; Y can be $-(CH_2CH_2S)-$; Z can be chosen from a hydrogen atom, an alkyl group having 1 to 5 carbon atoms or $(CH_2)_mSY_nW$; W can be an epithiopropyl group represented by the following formula:

(VIII) 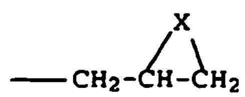

wherein X can be O or S.

Additional non-limiting examples of suitable episulfide-containing materials can include but are not limited to 2,5-bis(β-epithiopropylthiomethyl)-1,4-dithiane; 2,5-bis(β-epithiopropylthioethylthiomethyl)-1,4-dithiane; 2,5-bis(β-epithiopropylthioethyl)-1,4-dithiane; 2,3,5-tri(β-epithiopropylthioethyl)-1,4-dithiane; 2,4,6-tris(β-epithiopropylmethyl)-1,3,5-trithiane; 2,4,6-tris(β-epithiopropylthioethyl)-1,3,5-trithiane; 2,4,6-tris(β-epithiopropylthiomethyl)-1,3,5-trithiane; 2,4,6-tris(β-epithiopropylthioethylthioethyl)-1,3,5-trithiane;

(IX)

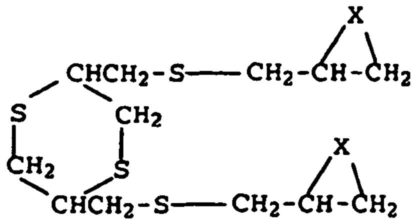

(X)

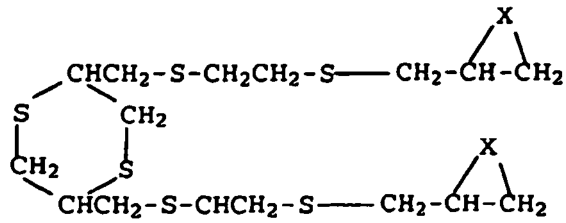

(XI)

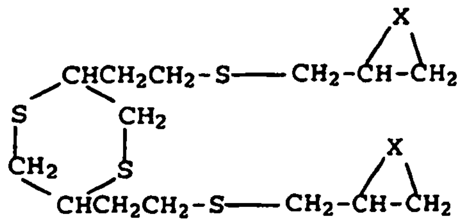

(XII)

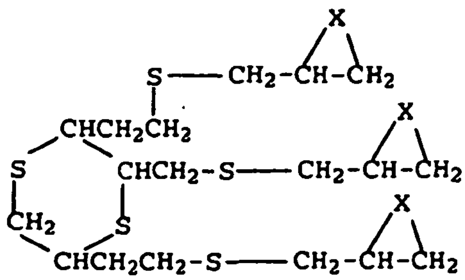

wherein X can be as defined above.In a non-limiting embodiment, the polyurethane prepolymer can be reacted with an episulfide-containing material of the structural formula XXXII:

(XXXII)

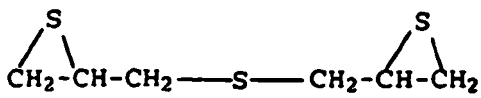

In alternate non-limiting embodiments, various known additives can be incorporated into the sulfur-containing polyureaurethane of the present invention. Such additives can include but are not limited to light stabilizers, heat stabilizers, antioxidants, ultraviolet light absorbers, mold release agents, static (non-photochromic) dyes, pigments and flexibilizing additives, such as but not limited to alkoxylated phenol benzoates and poly(alkylene glycol) dibenzoates. Non-limiting examples of anti-yellowing additives can include 3-methyl-2-butenol, organo pyrocarbonates and triphenyl phosphite (CAS registry no. 101-02-0). Such additives can be present in an amount such that the additive constitutes less than 10 percent by weight, or less than 5 percent by weight, or less than 3 percent by weight, based on the total weight of the prepolymer. In alternate non-limiting embodiments, the aforementioned optional additives can be mixed with the polyisocyanate and/or polyisothiocyanate. In a further non-limiting embodiment, the optional additives can be mixed with active hydrogen-containing material.

In a non-limiting embodiment, the resulting sulfur-containing polyureaurethane of the present invention when

at least partially cured can be solid and essentially transparent such that it is suitable for optical or ophthalmic applications. In alternate non-limiting embodiments, the sulfur-containing polyureaurethane can have a refractive index of at least 1.55, or at least 1.56, or at least 1.57, or at least 1.58, or at least 1.59, or at least 1.60, or at least 1.62, or at least 1.65. In further alternate non-limiting embodiments, the sulfur-containing polyureaurethane can have an Abbe number of at least 32, or at least 35, or at least 38, or at least 39, or at least 40, or at least 44.

In a non-limiting embodiment, the sulfur-containing polyureaurethane when polymerized and at least partially cured can demonstrate good impact resistance/strength. Impact resistance can be measured using a variety of conventional methods known to one skilled in the art. In a non-limiting embodiment, the impact resistance is measured using the Impact Energy Test which consists of testing a flat sheet sample of polymerizate having a thickness of 3mm, and cut into a square piece approximately 4cm x 4cm. The flat sheet sample of polymerizate is supported on a flat O-ring which is attached to top of the pedestal of a steel holder, as defined below. The O-ring is constructed of neoprene having a hardness of 40 $\pm$ 5 Shore A durometer, a minimum tensile strength of 8.3 MPa, and a minimum ultimate elongation of 400 percent, and has an inner diameter of 25 mm, an outer diameter of 31 mm, and a thickness of 2.3 mm. The steel holder consists of a steel base, with a mass of approximately 12 kg, and a steel pedestal affixed to the steel base. The shape of said steel pedestal is approximated by the solid shape which would result from adjoining onto the top of a cylinder, having an outer diameter of 75 mm and a height of 10 mm, the frustum of a right circular cone, having a bottom diameter of 75 mm, a top diameter of 25 mm, and a height of 8 mm, wherein the center of said frustum coincides with the center of said cylinder. The bottom of said steel pedestal is affixed to said steel base, and the neoprene O-ring is affixed to the top of the steel pedestal, with the center of said O-ring coinciding with the center of the steel pedestal. The flat sheet sample of polymerizate is set on top of the O-ring with the center of said flat sheet sample coinciding with the center of said O-ring. The Impact Energy Test is carried out by dropping steel balls of increasing weight from a distance of 50 inches (1.27 meters) onto the center of the flat sheet sample. The sheet is determined to have passed the test if the sheet does not fracture. The sheet is determined to have failed the test when the sheet fractures. As used herein, the term "fracture" refers to a crack through the entire thickness of the sheet into two or more separate pieces, or detachment of one or more pieces of material from the backside of the sheet (i.e., the side of the sheet opposite the side of impact). The impact strength of the sheet is reported as the impact energy that corresponds to the highest level (i.e., largest ball) at which the sheet passes the test, and it is calculated acording to the following formula:

$$E=mgd$$

wherein E represent impact energy in Joules (J), m represents mass of the ball in kilograms (kg), g represents acceleration due to gravity (i.e., 9.80665 m/sec$^2$) and d represents the distance of the ball drop in meters (i.e., 1.27 m). In an alternate non-limiting embodiment, using the Impact Energy Test as described herein, the impact strength can be at least 2.0 joules, or at least 4.95 joules.

In another non-limiting emobidment, the sulfur-containing polyureaurethane of the present invention when at least partially cured can have low density. In alternate non-limiting embodiments, the density can be at least 1.0, or at least 1.1 g/cm$^3$, or less than 1.3, or less than 1.25, or less than 1.2 g/cm$^3$, or from 1.0 to 1.2 grams/cm$^3$, or from 1.0 to 1.25 grams/cm$^3$, or from 1.0 to less than 1.3 grams/cm$^3$. In a non-limiting embodiment, the density is measured using a DensiTECH instrument manufactured by Tech Pro, Incorporated in accordance with ASTM D297.

Solid articles that can be prepared using the sulfur-containing polyureaurethane of the present invention include but are not limited to optical lenses, such as plano and ophthalmic lenses, sun lenses, windows, automotive transparencies, such as windshields, sidelights and backlights, and aircraft transparencies.

In a non-limiting embodiment, the sulfur-containing polyureaurethane polymerizate of the present invention can be used to prepare photochromic articles, such as lenses. In a further embodiment, the polymerizate can be transparent to that portion of the electromagnetic spectrum which activates the photochromic substance(s), i.e., that wavelength of ultraviolet (UV) light that produces the colored or open form of the photochromic substance and that portion of the visible spectrum that includes the absorption maximum wavelength of the photochromic substance in its UV activated form, i.e., the open form.

A wide variety of photochromic substances can be used in the present invention. Suitable photochromic substances, suitable amounts thereof, and methods of incorporation into the polymerizate are described in WO 2004/060951 A1 at [00151] to [00161].

In another embodiment, the photochromic substance can be added to the sulfur-containing polyureaurethane prior to polymerizing and/or cast curing the material. In this embodiment, the photochromic substance used can be chosen such that it is resistant to potentially adverse interactions with, for example, the isocyanate, isothiocyante and amine groups present. Such adverse interactions can result in deactivation of the photochromic substance, for example, by trapping them in either an open or closed form.

Further non-limiting examples of suitable photochromic substances for use in the present invention can include photochromic pigments and organic photochromic substances encapsulated in metal oxides such as those disclosed

in U.S. Patents 4,166,043 and 4,367,170; organic photochromic substances encapsulated in an organic polymerizate such as those disclosed in U.S. Patent 4,931,220.

EXAMPLES

In the following examples, unless otherwise stated, the 1H NMR and 13C NMR were measured on a Varian Unity Plus (200 MHz) machine; the Mass Spectra were measured on a Mariner Bio Systems apparatus; the refractive index and Abbe number were measured on a multiple wavelength Abbe Refractometer Model DR-M2 manufactured by ATAGO Co., Ltd.; the refractive index and Abbe number of liquids were measured in accordance with ASTM-D1218; the refractive index and Abbe number of solids was measured in accordance with ASTM-D542; the refractive index (e-line or d-line) was measured at a temperature of 20°C; the density of solids was measured in accordance with ASTM-D792; and the viscosity was measured using a Brookfield CAP 2000+ viscometer.

EXAMPLE 1- Preparation of Reactive Polyisocyanate Prepolymer 1 (RP1) (not an example of the present invention)

In a reaction vessel equipped with a paddle blade type stirrer, thermometer, gas inlet, and addition funnel, 11721 grams (89.30 equivalents of NCO) of Desmodur W obtained from Bayer Corporation, 5000 grams (24.82 equivalents of OH) of a 400 MW polycaprolactone diol (CAPA 2047A obtained from Solvay), 1195 grams (3.22 equivalents of OH) of 750 MW polycaprolactone diol (CAPA 2077A obtained from Solvay), and 217.4 grams (4.78 equivalents of OH) of trimethylol propane (TMP) obtained from Aldrich were charged. Desmodur W (4,4'-methylenebis(cyclohexyl isocyanate) containing 20% of the trans,trans isomer and 80% of the cis,cis and cis, trans isomers) was obtained from Bayer Corporation. The contents of the reactor were stirred at a rate of 150 rpm and a nitrogen blanket was applied as the reactor contents were heated to a temperature of 120ºC at which time the reaction mixture began to exotherm. The heat was removed and the temperature rose to a peak of 140ºC for 30 minutes and then began to cool. Heat was applied to the reactor when the temperature reached 120ºC and was maintained at that temperature for 4 hours to form the prepolymer (Component A). The reaction mixture was sampled and analyzed for % NCO according to the method described below. The analytical result showed 13.1.% NCO groups. Before pouring out the contents of the reactor, 45.3 g of Irganox 1010 (thermal stabilizer obtained from Ciba Specialty Chemicals) and 362.7 g of Cyasorb 5411 (UV stabilizer obtained from Cytec) were mixed into the prepolymer (Component A).

THE NCO concentration of the prepolymer (Component A) was determined by reaction with an excess of n-dibutylamine (DBA) to form the corresponding urea followed by titration of the unreacted DBA with HCl in accordance with ASTM-2572-97.

REAGENTS

1. Tetrahydrofuran (THF), reagent grade.
2. 80/20 THF/propylene glycol (PG) mix. This solution was prepared in-lab by mixing 800 mls PG with 3.2 Liters of THF in 4 Liter bottle.
3. DBA certified ACS.
4. DBA/THF solution. 150 mL of dibutylamine (DBA) was combined with 750 mL tetrahydrofuran (THF) ; it was mixed well and transfered to an amber bottle.
5. Hydrochloric acid, concentrated. ACS certified.
6. Isopropanol, technical grade.
7. Alcoholic hydrochloric acid, 0.2N. 75-ml of concentrated hydrochloric acid was slowly added to a 4-liter bottle of technical grade isopropanol, while stirring with a magnetic stirrer. It was mixed for a minimum of 30 minutes. This solution was standardized using THAM (Tris hydroxyl methyl amino methane) as follows: Into a glass 100-mL beaker, was weighed approximately 0.6 g $(HOCH_2)_3CNH_2$ primary standard to the nearest 0.1 mg and the weight was recorded. 100-mL DI water was added and mixed to dissolve and titrated with the prepared alcoholic HCl. This procedure was repeated a minimum of one time and the values averaged using the calculation below.

$$\text{Normality HCL} = \frac{(\text{Standard wt., grams})}{(\text{mLs HCl})\ (0.12114)}$$

EQUIPMENT

1. Polyethylene beakers, 200-mL, Falcon specimen breakers, No. 354020.

2. Polyethylene lids for above, Falcon No. 354017.
3. Magnetic stirrer and stirring bars.
4. Brinkmann dosimeter for dispensing or 10-mL pipet.
5. Autotitrator equipped with pH electrode.
25-mL, 50-mL dispensers for solvents or
25-mL and 50-mL pipets.

PROCEDURE-

1. Blank determination: Into a 220-mL polyethylene beaker was added 50 mL THF followed by 10.0 mL DBA/THF solution. The solution was capped and allowed to mix with magnetic stirring for 5 minutes. 50 mL of the 80/20 THF/PG mix was added and titrated using the standardized alcoholic HCl solution and this volume was recorded. This procedure was repeated and these values averaged for use as the blank value.
2. In a polyethylene beaker was weighed 1.0 gram of the prepolymer sample and this weight was recorded to the nearest 0.1 mg. 50 mL THF was added, the sample was capped and allowed to dissolve with magnetic stirring.
3. 10.0 mL DBA/THF solution was added, the sample was capped and allowed to react with stirring for 15 minutes.
4. 50 mL 80/20 THF/PG solution was added.
5. The beaker was placed on the titrator and the titration was started. This procedure was repeated.

CALCULATIONS -

$$\%NCO = \frac{(\text{mls Blank} - \text{mls Sample}) \times (\text{Normality HCl}) \times (4.2018)}{\text{Sample weight, g}}$$

$$IEW = \frac{(\text{Sample wt., grams}) \times (1000)}{(\text{mls Blank} - \text{mls Sample}) \times (\text{Normality HCl})}$$

IEW = Isocyanate Equivalent Weight

EXAMPLE 2- Preparation of Reactive Polyisocyanate Prepolymer 2 (RP2) (not an example of the present invention)

In a reactor vessel containing a nitrogen blanket, 450 grams of 400 MW polycaprolactone, 109 grams of 750 MW polycaprolactone, 114.4 grams of trimethylol propane, 3000 grams of Pluronic L62D, and 2698 grams of Desmodur W, were mixed together at room temperature to obtain NCO/OH equivalent ratio of 2.86. Desmodur W (4,4'-methylenebis (cyclohexyl isocyanate) containing 20% of the trans, trans isomer and 80% of the cis,cis and cis, trans isomers) was obtained from Bayer Corporation. Pluronic L62D (a polyethylene oxide-polypropylene oxide block polyether diol) was obtained from BASF. The reaction mixture was heated to a temperature of 65°C and then 30 ppm of dibutyltindilaurate catalyst, (obtained from Aldrich) was added and the heat source was removed. The resulting exotherm raised the temperature of the mixture to 112°C. The reaction was then allowed to cool to a temperature of 100°C, and 131 grams of UV absorber Cyasorb 5411 (obtained from American Cyanamid/Cytec) and 32.66 grams of Irganox 1010 (obtained from Ciba Geigy) were added with 0.98 grams of one weight percent solution of Exalite Blue 78-13 (obtained from Exciton) dissolved in Desmodur W (4,4'-methylenebis(cylohexylisocyanate)). The mixture was stirred for an additional two hours at 100°C and then allowed to cool to room temperature. The isocyanate (NCO) concentration of the prepolymer was 8.7% as measured using the procedure described above (see Example 1).

EXAMPLE 3- Preparation of Reactive Polyisocyanate Prepolymer 3 (RP3) (not an example of the present invention)

In a reactor vessel containing a nitrogen blanket, 450 grams of 400 MW polycaprolactone, 109 grams of 750 MW polycaprolactone, 114.4 grams of trimethylol propane, 3000 grams of Pluronic L62D, and 3500 grams of Desmodur W, were mixed together at room temperature to obtain NCO/OH equivalent ratio of 3.50. Desmodur W (4,4'-methylenebis (cyclohexyl isocyanate) containing 20% of the trans,trans isomer and 80% of the cis,cis and cis, trans isomers) was obtained from Bayer Corporation. Pluronic L62D (a polyethylene oxide-polypropylene oxide block polyether diol and was obtained from BASF. The reaction mixture was heated to a temperature of 65°C and then 30 ppm of dibutyltindilaurate catalyst (obtained from Aldrich) was added and the heat source was removed. The resulting exotherm raised the temperature of the mixture to 112°C. The reaction was then allowed to cool to a temperature of 100°C, and 131 grams of UV absorber Cyasorb 5411 (obtained from American Cyanamid/Cytec) and 32.66 grams of Irganox 1010 (obtained from Ciba Geigy) were added with 0.98 grams of one weight percent solution of Exalite Blue 78-13 (obtained from Exciton) dissolved in Desmodur W (4,4'-methylenebis(cylohexylisocyanate)). The mixture was stirred for an additional two hours at 100°C and then allowed to cool to room temperature. The isocyanate (NCO) concentration of the prepolymer was 10.8% as measured in accordance with the procedure described above (see Example 1).

EXAMPLE 4- Preparation of Reactive Polyisocyanate Prepolymer 4 (RP4) (not an example of the present invention)

In a reactor vessel containing a nitrogen blanket, 508 grams of 400 MW polycaprolactone, 114.4 grams of trimethylol propane, 3000 grams of Pluronic L62D, and 4140 grams of Desmodur W, were mixed together at room temperature to obtain NCO/OH equivalent ratio of 4.10. Desmodur W (4,4'-methylenebis(cyclohexyl isocyanate) containing 20% of the trans,trans isomer and 80% of the cis,cis and cis, trans isomers) was obtained from Bayer Corporation. Pluronic L62D (polyethylene oxide-polypropylene oxide block polyether diol) was obtained from BASF. The reaction mixture was heated to a temperature of 65°C and then 30 ppm of dibutyltindilaurate catalyst (obtained from Aldrich) was added and the heat source was removed. The resulting exotherm raised the temperature of the mixture to 112°C. The reaction was then allowed to cool to a temperature of 100°C, and 150 grams of UV absorber Cyasorb 5411 (obtained from American Cyanamid/Cytec) and 37.5 grams of Irganox 1010 (obtained from Ciba Geigy) were added with 1.13 grams of one weight percent solution of Exalite Blue 78-13 (obtained from Exciton) dissolved in Desmodur W, 4,4'-methylenebis(cylohexylisocyanate). The mixture was stirred for an additional two hours at 100°C and then allowed to cool to room temperature. The isocyanate (NCO) concentration of the prepolymer was 12.2% as measured in accordance with the procedure described above (see Example 1).

EXAMPLE 5 (comparative example*)*

30.0 g of RP1 and 10.0 g of bis-epithiopropyl sulfide (formula XXXII) were mixed in a reactor by stirring at a temperature of 50°C until a homogeneous mixture was obtained. 4.00 g of PTMA, 2.67g of DETDA and 5.94 g of MDA were mixed in a reactor by stirring at a temperature of 50°C until a homogeneous mixture was obtained. Both mixtures were degassed under vacuum at 50°C. Then the mixtures were combined and mixed at this temperature and homogenized by gentle stirring for 1-2 minutes. The resulting clear mixture was immediately charged between two flat glass molds. The molds were heated at a temperature of 130°C for 5 hours, yielding a transparent plastic sheet with the refractive index (e-line), Abbe number, density and impact values shown in Table 1.

EXAMPLE 6 (comparative example)

24.0 g of RP1 and 20.0 g of bis-epithiopropyl sulfide (formula XXXII) were mixed in a reactor by stirring at a temperature of 50°C until a homogeneous mixture was obtained. 2.00 g of DMDS, 2.14g of DETDA, 4.75 g of MDA and 0.12 g Irganox 1010 (obtained from Ciba Specialty Chemicals) were mixed in a reactor by stirring at a temperature of 50°C until a homogeneous mixture was obtained. Both mixtures were degassed under vacuum at 50°C. The mixtures were then combined and mixed at this temperature and homogenized by gentle stirring for 1-2 minutes. The resulting clear mixture was immediately charged between two flat glass molds. The molds were heated to a temperature of 130°C for 5 hours, yielding a transparent plastic sheet with the refractive index (e-line), Abbe number, density and impact resistance values shown in Table 1.

EXAMPLE 7 (comparative example)

30.0 g of RP1 and 20.0 g of bis-epithiopropyl sulfide (Formula XXXII) were mixed in a reactor by stirring at a temperature of 50°C until a homogeneous mixture was obtained. 2.40 g of PTMA, 5.34g of DETDA and 3.96 g of MDA were mixed in a reactor by stirring at a temperature of 50°C until a homogeneous mixture was obtained. Both mixtures were degassed under vacuum at 50°C. The mixtures were then combined and mixed at this temperature and homogenized by gentle stirring for 1-2 minutes. The resulting clear mixture was immediately charged between two flat glass molds. The molds were heated to a temperature of 130°C for 5 hours, yielding a transparent plastic sheet with the refractive index (e-line), Abbe number, density and impact values shown in Table 1.

EXAMPLE 8 (comparative example*)*

24.0 g of RP1 and 20.0 g of bis-epithiopropyl sulfide (Formula XXXII) were mixed in a reactor by stirring at s temperature of 50°C until a homogeneous mixture was obtained. 2.85g of DETDA and 3.96 g of MDA were mixed in a

reactor by stirring at a temperature of 50°C until homogeneous mixture was obtained. Both mixtures were degassed under vacuum at 50°C. The mixtures were then combined and mixed at this temperature and homogenized by gentle stirring for 1-2 minutes. The resulting clear mixture was immediately charged between two flat glass molds. The molds were heated to a temperature of 130°C for 5 hours, yielding a transparent plastic sheet with the refractive index (e-line), Abbe number, density and impact values shown in Table 1.

EXAMPLE 9 (comparative example)

30.0 g of RP3 and 25.0 g of bis-epithiopropyl sulfide (Formula XXXII) were mixed in a reactor by stirring at a temperature of 50°C until a homogeneous mixture was obtained. 3.75 g of DMDS, 2.45g of DETDA and 4.66 g of MDA were mixed in a reactor by stirring at a temperature of 50°C until homogeneous mixture was obtained. Both mixtures were degassed under vacuum at 50°C. The mixtures were then combined and mixed at this temperature and homogenized by gentle stirring for 1-2 minutes. The resulting clear mixture was immediately charged between two flat glass molds. The molds were heated to a temperature of 130°C for 5 hours, yielding a transparent plastic sheet with the refractive index (e-line), Abbe number, density and impact values shown in Table 1.

EXAMPLE 10 (comparative example)

30.0 g of RP4 and 25.0 g of bis-epithiopropyl sulfide (Formula XXXII) were mixed in a reactor by stirring at a temperature of 50°C until a homogeneous mixture was obtained 3.75 g of DMDS, 2.71g of DETDA and 5.17 g of MDA were mixed in a reactor by stirring at a temperature of 50°C until homogeneous mixture was obtained. Both mixtures were degassed under vacuum at 50°C. The mixtures were then combined and mixed at this temperature and homogenized by gentle stirring for 1-2 minutes. The resulting clear mixture was immediately charged between two flat glass molds. The molds were heated to a temperature of 130°C for 5 hours, yielding a transparent plastic sheet with the refractive index (e-line), Abbe number, density and impact values shown in Table 1.

EXAMPLE 11 (comparative example)

30.0 g of RP2 and 21.4.0 g of bis-epithiopropyl sulfide (Formula XXXII) were mixed in a reactor by stirring at a temperature of 50°C until a homogeneous mixture was obtained. 3.21 g of DMDS, 1.92 g of DETDA and 3.67 g of MDA were mixed in a reactor by stirring at a temperature of 50°C until homogeneous mixture was obtained. Both mixtures were degassed under vacuum at 50°C. The mixtures were then combined and mixed at this temperature and homogenized by gentle stirring for 1-2 minutes. The resulting clear mixture was immediately charged between two flat glass molds. The molds were heated to a temperature of 130°C for 5 hours, yielding a transparent plastic sheet with the refractive index (e-line), Abbe number, density and impact values shown in Table 1.

Table 1.

| Experiment # | Refractive Index (e-line) | Abbe Number | Density ($g/cm^3$) | Impact Energy* ( J) |
|---|---|---|---|---|
| 5 | 1.58 | 38 | 1.195 | 3.99 |
| 6 | 1.61 | 36 | 1.231 | 2.13 |
| 7 | 1.59 | 38 | 1.217 | 2.47 |
| 8 | 1.60 | 37 | 1.222 | 2.77 |
| 9 | 1.60 | 38 | 1.227 | >4.95 |
| 10 | 1.59 | 37 | 1.211 | 3.56 |
| 11 | 1.59 | 38 | 1.218 | >4.95 |
| *The Impact Energy was measured in accordance with the Impact Energy Test previously described herein. The ball sizes that were used in this test and the corresponding impact energies are listed below. | | | | |

| Ball weight, kg | Impact Energy, J |
|---|---|
| 0.016 | 0.20 |

(continued)

| Ball weight, kg | Impact Energy, J |
|---|---|
| 0.022 | 0.27 |
| 0.032 | 0.40 |
| 0.045 | 0.56 |
| 0.054 | 0.68 |
| 0.067 | 0.83 |
| 0.080 | 1.00 |
| 0.094 | 1.17 |
| 0.110 | 1.37 |
| 0.129 | 1.60 |
| 0.149 | 1.85 |
| 0.171 | 2.13 |
| 0.198 | 2.47 |
| 0.223 | 2.77 |
| 0.255 | 3.17 |
| 0.286 | 3.56 |
| 0.321 | 3.99 |
| 0.358 | 4.46 |
| 0.398 | 4.95 |

EXAMPLE 12 - Synthesis of Polythioether (PTE) Dithiol 1 (not an example of the present invention)

NaOH (44.15 g, 1.01 mol) was dissolved in 350 ml of $H_2O$. The solution was allowed to cool to room temperature and 500 ml of toluene were added, followed by the addition of dimercaptodiethyl sulfide (135 ml, 159.70 g, 1.04 mol). The reaction mixture was heated to a temperature of 40°C, stirred and then cooled to room temperature. 1, 1 -Dichloroacetone (DCA) (50 ml, 66.35 g, 0.52 mol) was dissolved in 250 ml of toluene and then added drop-wise to the reaction mixture while the temperature was maintained at from 20-25°C. Following the drop-wise addition, the reaction mixture was stirred for an additional 20 hours at room temperature. The organic phase was than separated, washed with 2x100 ml of $H_2O$, 1×100 ml of brine and dried over anhydrous $MgSO_4$. The drying agent was filtered off and the toluene was evaporated using a Buchi Rotaevaporator. The hazy residue was filtered through Celite to provide 182 g (96% yield) of PTE Dithiol 1 as a colorless clear oily liquid.

The results of the Mass Spectra were ESI-MS: 385 (M + Na) and the molecular weight was calculated as 362.

The results of the NMR were $^1H$ NMR ($CDCl_3$, 200 MHz): 4.56 (s, 1H), 2.75 (m, 16 H), 2.38 (s, 3H), 1.75 (m, 1.5H)).

The SH groups within the product were determined using the following procedure. A sample size (0.1 g) of the product was combined with 50 mL of tetrahydrofuran (THF)/propylene glycol (80/20) solution and stirred at room temperature until the sample was substantially dissolved. While stirring, 25.0 mL of 0.1 N iodine solution (commercially obtained from Aldrich 31, 8898-1) was added to the mixture and allowed to react for a time period of from 5 to 10 minutes. To this mixture was added 2.0 mL concentrated HCl. The mixture was titrated potentiometrically with 0.1 N sodium thiosulfate in the millivolt (mV) mode. The resulting volume of titrant is represented as "mLs Sample" in the below equation. A blank value was initially obtained by titrating 25.0 mL of iodine (including 1 mL of concentrated hydrochloric acid) with sodium thiosulfate in the same manner as conducted with the product sample. This resulting volume of titrant is represented as "mLs Blank" in the below equation.

$$\%SH = \frac{(\text{mLsBlank} - \text{mLsSample})(\text{Normality } Na_2S_2O_3)(3.307)}{\text{sample weight, g}} = 13.4$$

The refractive index was 1.618 (20°C) and the Abbe number was 35.

The product sample (100mg, 0.28 mmol) was acetylated by dissolving it in 2 ml of dichloromethane at room temperature. Acetic anhydride (0.058 ml, 0.6 mmol) was added to the reaction mixture, and triethylamine (0.09 ml, 0.67 mmol) and dimethylaminopyridine (1 drop) were then added. The mixture was maintained at room temperature for 2 hours. The mixture was then diluted with 20 ml of ethyl ether, washed with aqueous $NaHCO_3$ and dried over $MgSO_4$. The drying agent was filtered off; the volatiles were evaporated off under vacuum and the oily residue was purified by

silica gel flash chromatography (hexane / ethyl acetate 8:2 volume per volume) to provide 103 mg (83% yield) of diacetylated product with the following results:

$^1$H NMR (CDC13, 200 MHz): 4.65 (s, 1H), 3.12-3.02 (m, 4H), 2.75-2.65 (m, 4H), 2.95-2.78 (m, 8 H), 2.38 (s, 3H), 2.35 (s, 6H).
ESI-MS: 385 (M + Na).

EXAMPLE 13 - Synthesis of PTE Dithiol 2 (not an example of the present invention)

NaOH (23.4 g, 0.58 mol) was dissolved in 54 ml of $H_2O$. The solution was cooled to room temperature and DMDS (30.8 g, 0.20 mol) was added. Upon stirring the mixture, dichloroacetone (19.0 g, 0.15 mol) was added dropwise while maintaining the temperature from 20-25°C. After the addition of dichloroacetone was completed, the mixture was stirred for an additional 2 hours at room temperature. The mixture was neutralized with 10% HCl to a pH of 9, and 100 ml of dichloromethane were then added, and the mixture was stirred. Stirring was terminated; the mixture was transferred to a separatory funnel and allowed to separate. Following phase separation, the organic phase was washed with 100 ml of $H_2O$, and dried over anhydrous $MgSO_4$. The drying agent was filtered off and the solvent was evaporated using a Buchi Rotaevaporator, which provided 35 g (90% yield) of transparent liquid having a viscosity (73°C) of 38 cP; refractive index (e-line) of 1.622 (20°C), Abbe number of 36, and SH group analysis of 8.10%.

EXAMPLE 14 - Synthesis of PTE Dithiol 3 (not an example of the present invention)

NaOH (32.0 g, 0.80 mol) was dissolved in 250 ml of $H_2O$. The solution was cooled to room temperature and 240 ml of toluene were added followed by the addition of DMDS (77.00 g, 0.50 mol). The mixture was heated to a temperature of 40°C, stirred and then cooled under nitrogen flow until room temperature was reached. DCA (50.8 g, 0.40 mol) was dissolved in 70 ml of toluene and added dropwise to the mixture with stirring, while the temperature was maintained from 20-25°C. After the addition was completed, the mixture was stirred for additional 16 hours at room temperature. Stirring was stopped, the mixture was transferred to a separatory funnel and allowed to separate. The organic phase was separated, washed with 2×100 ml of $H_2O$, 1×100 ml of brine and dried over anhydrous $MgSO_4$. The drying agent was filtered off and toluene was evaporated using a Buchi Rotaevaporator to provide 89 g (90% yield) of transparent liquid having viscosity (73°C) of 58 cP; refractive index (e-line)of 1.622 (20°C), Abbe number of 36; and SH group analysis of 3.54%.

EXAMPLE 15 - Synthesis of PTE Dithiol 4 (not an example of the present invention)

NaOH (96.0 g, 2.40 mol) was dissolved in 160 ml of $H_2O$ and the solution was cooled to room temperature. DMDS (215.6 g, 1.40 mol), 1,1-dichloroethane (DCE) (240.0 g, 2.40 mol) and tetrabutylphosphonium bromide (8.14 g, 1 mol. %) were mixed and added to the NaOH mixture dropwise under nitrogen flow and vigorous stirring while the temperature was maintained between 20-25°C. After the addition was completed, the mixture was stirred for an additional 15 hours at room temperature. The aqueous layer was acidified and extracted to give 103.0 g of unreacted DMDS. The organic phase was washed with 2x100 ml of $H_2O$, 1×100 ml of brine and dried over anhydrous $MgSO_4$. The drying agent was filtered off and the excess DCE was evaporated using a Buchi Rotaevaporator to yield 78 g (32% yield) transparent liquid having viscosity (73°C) of 15 cP; refractive index (e-line) of 1.625 (20°C), Abbe number of 36; and SH group analysis of 15.74%.

EXAMPLE 16 - Synthesis of PTE Dithiol 5 (not an example of the present invention)

NaOH (96.0 g, 2.40 mol) was dissolved in 140 ml of $H_2O$ and the solution was cooled to a temperature of 10°C and charged in a three necked flask equipped with mechanical stirrer and, inlet and outlet for Nitrogen. DMDS (215.6 g, 1.40 mol) was then charged and the temperature was maintained at 10°C. To this mixture was added dropwise solution of tetrabutylphosphonium bromide (8.14 g, 1 mol. %) in DCE (120 g, 1.2 mol) under Nitrogen flow and vigorous stirring. After the addition was completed the mixture was stirred for an additional 60 hours at room temperature. 300 ml of $H_2O$ and 50 ml of DCE were then added. The mixture was transferred to a separatory funnel, shaken well, and following phase separation, 200 ml toluene were added to the organic layer; it was then washed with 150 ml $H_2O$, 50 ml 5% HCl and 2x100 ml $H_2O$ and dried over anhydrous $MgSO_4$. The drying agent was filtered off and the solvent was evaporated on rotaevaporator to yield 80 g (32% yield) of transparent liquid having viscosity (73°C) of 56 cP; refractive index (e-line) of 1.635 (20°C), Abbe number of 36; and SH group analysis of 7.95%.

EXAMPLE 17 - Synthesis of Polythiourethane Prepolymer (PTUPP) 1 (comparative)

Desmodur W (62.9 g, 0.24 mol) and PTE Dithiol 1 (39.4 g, 0.08 mol) were mixed and degassed under vacuum for 2.5 hours at room temperature. Dibutyltin dilaurate (0.01 % by weight of the reaction mixture) was then added and the mixture was flushed with nitrogen and heated for 32 hours at a temperature of 86°C. SH group analysis showed complete consumption of SH groups. The heating was stopped. The resulting mixture had viscosity (73°C) of 600 cP refractive index (e-line) of 1.562 (20°C), Abbe number of 43; and NCO groups of 13.2 % (calculated 13.1%). The NCO was determined according to the procedure described in Example 1 herein.

EXAMPLE 18 - Synthesis of PTUPP 2 (comparative)

Desmodur W (19.7 g, 0.075 mol) and PTE Dithiol 2 (20.0g, 0.025 mol) were mixed and degassed under vacuum for 2.5 hours at room temperature. Dibutyltin dichloride (0.01 weight percent) was then added to the mixture, and the mixture was flushed with nitrogen and heated for 18 hours at a temperature of 86°C. SH group analysis showed complete consumption of SH groups. The heating was stopped. The resulting mixture had viscosity (at 73°C) of 510 cP refractive index (e-line) of 1.574 (20°C), Abbe number of 42; and NCO groups of 10.5 % (calculated 10.6%).

EXAMPLE 19 - Synthesis of PTUPP 3 (comparative)

Desmodur W (31.0 g, 0.118 mol) and PTE Dithiol 3 (73.7 g, 0.039 mol) were mixed and degassed under vacuum for 2.5 hours at room temperature. Dibutyltin dichloride was then added (0.01 weight percent) to the mixture, and the mixture was flushed with nitrogen and heated for 37 hours at a temperature of 64°C. SH group analysis showed complete consumption of SH groups. The heating was stopped. The resulting mixture had viscosity (at 73°C) of 415 cP, refractive index (e-line) of 1.596 (20°C), Abbe number of 39; and NCO groups of 6.6% (calculated 6.3%).

EXAMPLE 20 - Chain Extension of Polythiourethane Prepolymer with Aromatic Amine (comparative)

PTUPP 1 (30 g) was degassed under vacuum at a temperature of 70°C for 2 hours. DETDA (7.11 g) and PTE Dithiol 1 (1.0 g) were mixed and degassed under vacuum at a temperature of 70°C for 2 hours. The two mixtures were then mixed together at the same temperature and charged between a preheated glass plates mold. The material was cured in a preheated oven at a temperature of 130°C for 5 hours. The cured material was transparent and had a refractive index (e-line) of 1.585 (20°C), Abbe number of 39 and density of 1.174 g/cm$^3$.

EXAMPLE 21 (comparative)

PTUPP 2 (25 g) was degassed under vacuum at a temperature of 65°C for 3 hours. DETDA (3.88 g) and PTE Dithiol 1 (3.83 g) were mixed and degassed under vacuum at a temperature of 65°C for 2 hours. The two mixtures were then mixed together at the same temperature and charged between a preheated glass plates mold. The material was cured in a preheated oven at a temperature of 130°C for 10 hours. The cured material was transparent and had refractive index (e-line) of 1.599 (20°C), Abbe number of 39 and density of 1.202 g/cm$^3$.

EXAMPLE 22 (comparative)

PTUPP 3 (40 g) was degassed under vacuum at a temperature of 65°C for 2 hours. DETDA (3.89 g) and PTE Dithiol 1 (3.84 g) were mixed and degassed under vacuum at a temperature of 65°C for 2 hours. The two mixtures were then mixed together at the same temperature and charged between a preheated glass plates mold. The material was cured in a preheated oven at a temperature of 130°C for 10 hours. The cured material was transparent and had refractive index (e-line) of 1.609 (20°C), Abbe number of 39 and density of 1.195 g/cm$^3$.

EXAMPLE 23 - Synthesis of 2-Methyl-2-Dichloromethyl-1,3-Dithiolane (not an example of the present invention)

In a three-necked flask equipped with a magnetic stirrer and having a nitrogen blanket at the inlet and outlet, were added 13.27 grams (0.104 mol) of 1,1-dichloroacetone, 11.23 grams (0.119 mol) of 1,2-ethanedithiol, 20 grams of $MgSO_4$ anhydrous, and 5 grams of Montmorilonite K-10 (commercially obtained from Aldrich) in 200 ml toluene. The mixture was stirred for 24 hours at room temperature. The insoluble product was filtered off and the toluene was evaporated off under vacuum to yield 17.2 grams (80% yield) of crude 2-methyl-2-dichloromethyl-1,3-dithiolane.

The crude product was distilled within a temperature range of from 102 to 112°C at 12 mm Hg. $^1H$ NMR and $^{13}C$ NMR results of the distilled product were: $^1H$ NMR (CDCl3, 200 MHz) : 5.93 (s, 1H) ; 3.34 (s, 4H) ; 2.02 (s, 3H); $^{13}C$

NMR (CDCl3, 50MHz) : 80.57; 40.98; 25.67.

EXAMPLE 24 - Synthesis of PTE Dithiol 6 (DMDS/VCH, 1:2 mole ratio) (not an example of the present invention)

Charged into a 1-liter 4-necked flask equipped with a mechanical stirrer, thermometer and two gas passing adapters (one for inlet and one for outlet), was dimercaptodiethyl sulfide (DMDS) (888.53g, 5.758 moles). The flask was flushed with dry nitrogen and 4-vinyl-1-cyclohexene (VCH) (311.47g, 2.879 moles) was added with stirring during a time period of 2 hours and 15 minutes. The reaction temperature increased from room temperature to 62°C after 1 hr of addition. Following addition of the vinylcyclohexene, the temperature was 37°C. The reaction mixture was then heated to a temperature of 60°C, and five 0.25g-portions of free radical initiator Vazo-52 (2,2'-azobis(2,4-dimethylpentanenitrile) obtained from DuPont) were added. Each portion was added after an interval of one hour. The reaction mixture was evacuated at 60°C/4-5mm Hg for one hour to yield 1.2 kg (yield: 100%) of colorless liquid with the following properties: viscosity of 300 cps @ 25°C refractive index (e-line) of 1.597 (20°C) ; Abbe Number of 39; and SH groups content of 16.7%.

EXAMPLE 25 - Synthesis of PTE Dithiol 7 (DMDS/VCH, 5:4 mole ratio) (not an example of the present invention)

In a glass jar with magnetic stirrer were mixed 21.6 grams (0.20 mole) of 4-vinyl-1-cyclohexene (VCH) from Aldrich and 38.6 grams (0.25 mole) of dimercaptodiethyl sulfide (DMDS) from Nisso Maruzen. The mixture had a temperature of 60°C due to the exothermicity of the reaction. The mixture was then placed in an oil bath at a temperature of 47 °C and stirred under a nitrogen flow for 40 hours. The mixture was cooled to room temperature. A colorless, viscous oligomeric product was obtained, having the following properties: viscosity of 10860, cps @ 25 °C; refractive index (e-line) of 1.604 (20°C) ; Abbe Number of 41; and SH groups content of 5.1%.

EXAMPLE 26 - Synthesis of Star Polymer (SP) (not an example of the present invention)

In a glass-lined reactor of 7500 1b capacity, were added 1,8-dimercapto-3,6-dioxaoctane (DMDO) (3907.54 1b, 21.43 moles), ethyl formate (705.53 1b, 9.53 moles), and anhydrous zinc chloride (90.45 1b, 0.66 mole). The mixture was stirred at a temperature of 85°C for 20 hours, then cooled to a temperature of 52°C. Added to the mixture was 96.48 1b of a 33% solution of 1,4-diazabicyclo[2.2.2]octane (DABCO) (0.28 mole) for one hour. The mixture was then cooled to a temperature of 49°C, and filtered through a 200-micron filter bag to provide liquid polythioether with the following properties: viscosity of 320 cps @ 25 °C; $n_D^{20}$ of 1.553; Abbe Number of 42; and SH groups content of 11.8% (thiol equivalent weight of 280).

EXAMPLE 27 - Synthesis of 2:1 Adduct of DMDS and Ethylene Glycol Dimethacrylate (not an example of the present invention)

Dimercaptodiethyl sulfide (42.64 g, 0.276 mole) was charged into a 100 ml, 4-necked flask equipped with a mechanical stirrer, thermometer, and two gas-passing adapters (one for inlet and the other for outlet). The flask was flushed with dry nitrogen and charged under stirring with 1,8-diazabicyclo[5.4.0]undec-7-ene (0.035 g)obtained from Aldrich. Ethylene glycol dimethacrylate (27.36 g, 0.138 mole) obtained from Sartomer under the trade name SR-206 was added into stirred solution of dithiol and base over a period of 12 minutes. Due to exotherm, the reaction temperature had increased from room temperature to 54°C during the addition step. Following completion of the addition of dimethacrylate, the temperature was 42°C. The reaction mixture was heated at a temperature of 63°C for five hours and evacuated at 63°C/4-5 mm Hg for 30 minutes to yield 70 g (yield: 100%) of colorless liquid (thiol equivalent weight of 255), having SH groups content of 12.94%.

EXAMPLE 28 not an example of the present invention - Synthesis of 3:2 Adduct of DMDS and Ethylene Glycol Dimethacrylate

Dimercaptodiethyl sulfide (16.20 grams, 0.105 mole) and ethylene glycol dimethacrylate (13.83 grams, 0.0698 mole) were charged into a small glass jar and mixed together using a magnetic stirrer. N,N-dimethylbenzylamine (0.3007 gram) obtained from Aldrich was added, and the resulting mixture was stirred and heated using an oil bath at a temperature of 75°C for 52 hours. A colorless to slightly yellow liquid was obtained having thiol equivalent weight of 314, viscosity of 1434 cps at 25°C and SH group content of 10.53%.

EXAMPLE 29 not an example of the present invention - Synthesis of 3:2 Adduct of DMDS and 2,2'-Thiodiethanethiol Dimethacrylate

Dimercaptodiethyl sulfide (13.30 grams, 0.0864 mole) and 2,2'-thiodiethanethiol dimethacrylate (16.70 grams, 0.0576 mole) obtained from Nippon Shokubai under the trade name S2EG were charged into a small glass jar and mixed together using a magnetic stirrer. N,N-dimethylbenzylamine (0.0154 gram) obtained from Aldrich was added, and the resulting mixture was stirred at ambient temperature (21-25 °C) for 75 hours. A colorless to slightly yellow liquid was obtained having thiol equivalent weight of 488, viscosity of 1470 cps at 25°C, refractive index $n_D^{20}$ of 1.6100, Abbe Number of 36, and SH group content of 6.76%.

EXAMPLE 30not an example of the present invention - Synthesis of 4:3 Adduct of DMDS and Allyl Methacrylate

Allylmethacrylate (37.8 g, 0.3 mol) and dimercapto diethyl sulfide (61.6 g, 0.4 mol) were mixed at room temperature. Three drops of 1,8-diazabicyclo[5.4.0]undec-7-ene were added upon stirring. The temperature of the mixture increased to 83°C due to the exothermicity of the reaction. The reactor containing the reaction mixture was put in an oil bath at a temperature of 65°C and was stirred for 21 hours. Irgacure 812 (0.08 g) obtained from Ciba was added and the mixture was irradiated with UV light for 1 minute. The UV light source used was a 300-watt FUSION SYSTEMS UV lamp, with a D-Bulb, which was positioned at a distance of 19 cm above the sample. The sample was passed beneath the UV light source at a linear rate of 30.5 cm / minute using a model no. C636R conveyor belt system, available commercially from LESCO, Inc. A single pass beneath the UV light source as described imparted 16 Joules / $cm^2$ of UV energy (UVA) to the sample. A SH titration analysis conducted 10 minutes following the UV irradiation, showed SH group content of 6.4% and SH equivalent weight of 515 g/equivalent. The viscosity of this product was 215 cps at 73°C the refractive index was $n_D$ was 1.5825, and the Abbe number was 40.

EXAMPLE 31 comparative example - Synthesis of PTUPP 4

4,4-dicyclohexylmethane diisocyanate (Desmodur W) from Bayer (20.96g, 0.08 mole), isophorone diisocyanate (IPDI) from Bayer (35.52g, 0.16 mole) and PTE Dithiol 6 (32.0 g, 0.08 mole) were mixed and degassed under vacuum for 2.5 hours at room temperature. Dibutyltin dilaurate (0.01%) obtained from Aldrich was then added to the mixture and the mixture was flushed with Nitrogen and heated for 16 hours at a temperature of 90°C. SH group analysis showed complete consumption of SH groups. The heating was terminated. The resulting clear mixture had viscosity (73°C) of 1800 cP, refractive index (e-line) of 1.555 (20°C), Abbe number of 44; and NCO groups of 14.02 %.

EXAMPLE 32 comparative example - Chain extension of PTUPP 4

PTUPP 4 (30 g) was degassed under vacuum at a temperature of 60°C for two hours. DETDA (7.57 g) and PTE Dithiol 6 (2.02g) were mixed and degassed under vacuum at a temperature of 60°C for 2 hours. The two mixtures were then mixed together at the same temperature and charged between a preheated glass plates mold. The material was cured in a preheated oven at a temperature of 130°C for five hours. The cured material was clear and had refractive index (e-line) of 1.574 (20°C) and Abbe number of 40.

EXAMPLE 33 comparative example - Synthesis of PTUPP 5

4,4-dicyclohexylmethane diisocyanate (Desmodur W) from Bayer (99.00g, 0.378 mole), PTE Dithiol 6 (47.00g, 0.118 mole) and Star Polymer (Example 26, 4.06 g, 0.0085 mole) were mixed and degassed under vacuum for 2.5 hours at room temperature. Dibutyltin dilaurate (Aldrich) was then added (0.01 %) and the mixture was flushed with Nitrogen and heated for 16 hours at a temperature of 90°C. SH group analysis showed complete consumption of SH groups. The heating was stopped. The resulting clear mixture had viscosity (73°C) of 1820 cP, refractive index (e-line) of 1.553 (20°C), Abbe number of 46; and NCO groups of 13.65%.

EXAMPLE 34 comparative example - Chain extension of PTUPP 5

PTUPP 5 (30 g) was degassed under vacuum at a temperature of 60°C for two hours. DETDA (6.94 g) and DMDS (1.13g) were mixed together and degassed under vacuum at a temperature of 60°C for two hours. The two mixtures were then mixed together at the same temperature and charged between preheated glass plates mold. The material was cured in a preheated oven at a temperature of 130°C for five hours. The cured material was clear and had refractive index (e-line) of 1.575 (20°C) and Abbe number of 41.

EXAMPLE 35 comparative example - One pot synthesis of polythiourea/urethane material

4,4-dicyclohexylmethane diisocyanate (Desmodur W) from Bayer (42.00g, 0.16 mole) was degassed under vacuum at room temperature for two hours. PTE Dithiol 6 (32.00g, 0.08 mole), DETDA (11.40 g, 0.064 mole) and DMDS (2.46 g, 0.016 mole) were mixed together and degassed under vacuum at room temperature for two hours. The two mixtures were then mixed together at the same temperature and charged between a preheated glass plates mold. The material was cured in a preheated oven at a temperature of 130°C for 24 hours. The cured material was clear. The results were as follows: refractive index (e-line) of 1.582 (20°C) and Abbe number of 40.

EXAMPLE 36 - Synthesis of dithiol oligomers

The starting materials shown in Table 2 were prepared according to the method specified in Table 2 and described below to yield a resulting dithiol oligomer having the properties shown in Table 2 for Entries 1-16.

Table 2. Oligomeric dithiols by reaction of dithiol and mixture of dienes.

| Entry | Starting Components Synthesis Method | Molar ratio | Calc. $M_n$ based on SH analysis result | Measured $n_D$, Abbe | Viscosity[a] cP (73°C) |
|---|---|---|---|---|---|
| 1 | VCH/AM/DMDS Method 2 | 2 / 2 / 5 | 1218 | 1.588, 41 | 236 |
| 2 | VCH/1,5HD/ DMDS Method 1 | 2 / 2 / 5 | 1218 | Solid at RT | 152 |
| 3 | VNB/EGDM/ DMDS Method 2 | 2 / 2 / 5 | 1346 | 1.580, 44 | 362 |
| 4 | VNB/AM/DMDS Method 2 | 2 / 2 / 5 | 1292 | 1.593, 41 | 329 |
| 5 | VNB/AM/DMDS Method 2 | 3 / 2 / 6 | 1529 | 1.596, 42 | 483 |
| 6 | VNB/DEGDVE/ DMDS Method 1 | 3 / 2 / 6 | 1630 | 1.590, 42 | 485 |
| 7 | VNB/DEGDVE/ DMDS Method 1 | 4 / 2 / 7 | 1888 | 1.593, 42 | 670 |
| 8 | VNB/BDDVE/ DMDS Method 1 | 4 / 2 / 7 | 1792 | 1.606, | 993 |
| 9 | VNB/DEGDVE/ DMDS Method 3 | 4 / 2 / 7 | 1887 | 1.595, 42 | 861 |
| 10 | VNB/BDDVE/ DEGDVE/ DMDS Method 3 | 4/1/1/7 | 1824 | 1.595. 43 | 790 |
| 11 | VNB/DEGDVE/ DMDS Method 3 | 2 / 1 / 4 | 1002 | 1.595, 42 | 272 |
| 12 | VNB/DEGDVE/ DMDS Method 3 | 2.33 / 1.28 / 4.65 | 1308 | 1.590, 42 | 415 |

(continued)

| Entry | Starting Components Synthesis Method | Molar ratio | Calc. $M_n$ based on SH analysis result | Measured $n_D$, Abbe | Viscosity[a] cP (73°C) |
|---|---|---|---|---|---|
| 13 | DIPEB/DEGDVE/ DMDS Method 1 | 2 / 1 / 4.25 | 904 | 1.600, 38 | 191 |
| 14 | VCH/EGDM/ DMDS Method 2 | 2 / 1 / 4 | 1048 | 1.587 42 | 224 |
| 15 | L/VNB/DMDS Method 3 | 2 / 1 / 4 | 1024 | 1.597, 41 | 374 |
| 16 | DIPEB/ NB/ DMDS Method 3 | 2 / 1 / 4 | 1086 | 1.614, 36 | 459 |

DMDS - 2-mercaptoethylsulfide (DMDS, obtained from Nisso-Maruzen Chemical Company)
VCH - 4-vinylcyclohexene
AM - allyl methacrylate (from Sartomer, USA)
VNB - 5-vinyl-2-norbornene (mixture of endo and *exo* isomers from Ineos Oxide, Belgium)
EGDM - ethylene glycol dimethacrylate (from Sartomer, USA)
DEGDVE - diethylene glycol divinyl Ether (from BASF, Germany)
BDDVE - 1,4-butanediol divinyl Ether (from BASF, Germany) 1,5-HD - 1,5-hexadiene (from Aldrich, USA)
DIPEB - 1,3-diisopropenylbenzene (from Cytec) L -(R)-(+)-Limonene, 97% (from Aldrich, USA)

Method 1. Synthesis of dithiol oligomer by radical initiated polymerization.

Table 2, Entry 8: In a three-necked glass flask equipped with thermometer, using a magnetic stirrer, were mixed 48.0 grams (0.4 mole) of VNB and 28.4 grams (0.2 mole) of (BDDVE). The flask was emersed in an oil bath having a temperature between 40-42°C. With slight heating, 0.400 grams (0.5%) Vazo 52 radical initiator (2,2'-azobis(2,4-dimethylpentanenitrile, obtained from DuPont) was dissolved in 107.8 grams (0.7 mole) of DMDS. This solution was charged in a dropping funnel and the solution was added drop-wise to the mixture of two dienes. The reaction was exothermic and the temperature of the mixture did not exceed 60°C. After the addition was completed (total addition time was 4 hours), the temperature of the oil bath was increased to a temperature of 60°C and the mixture was stirred at this temperature for 16 hours. The temperature was then increased to 75°C and the mixture was stirred for another 4 hours. The SH analysis was conducted and showed SHEW (SH (mercaptan) equivalent weight) of 894. The mixture was stirred at a temperature of 60°C for another 24 hours. The SH analysis was conducted and showed SHEW of 896. The $M_n$ for the oligomeric mixture was calculated based on SHEW as 1792. The measured refractive index no (at 20°C) was 1.606 and the viscosity of the mixture at 73°C was 993 cP.

The mixture slowly crystallized upon cooling to room temperature but melted again upon heating with essentially no change in the SH content or the viscosity.

The polythiol oligomers in Entries 2, 6, 7 and 13 were also prepared according to Method 1 as described above, with the exception that the starting compounds and corresponding molar ratios as shown in Table 2 were used.

Method 2. Stepwise synthesis of block-type dithiol oligomer, using base catalysis and then radical initiation.

(Table 2, Entry 4): In a glass jar, equipped with magnetic stirrer, 63 grams (0.5 mole) of AM were mixed with 192.5 grams (1.25 mole) DMDS. To this mixture, upon stirring at room temperature, 3 drops of 1,8-diazabicyclo[5.4.0] undec-7-ene (DBU, obtained from Aldrich) were added. The temperature of the mixture increased slightly due to the exothermic reaction. The mixture was stirred at room temperature for 2 hours, and then 60 grams (0.5 mole) of VNB were added drop-wise with a rate such that the temperature of the reaction did not exceed 70°C. After the addition was completed (over a time period of 2 hours), 0.180 grams (0.5%) radical initiator Vazo 64 (2,2'-azobisisobutyronitrile, obtained from DuPont) was added and the mixture was heated at 70°C for 15 hours. The SH group analysis was conducted and showed SHEW of 636 and viscosity at 73°C of 291 cP. The mixture was heated for another 15 hours at 65°C and the SH analysis then showed SHEW of 646 and viscosity of 329 cP at 73°C. The $M_n$ for the oligomeric mixture based on SHEW was calculated as 1292. The measured refractive index $n_D$ (at 20°C) was 1.593 and the Abbe number

was 41.

The mixture was a clear liquid and did not crystallize upon cooling.

The polythiol oligomers in Entries 1, 3, 5 and 14 were also prepared according to Method 2 as described above, with the exception that the starting compounds and corresponding molar ratios as shown in Table 2 were used.

Method 3. Stepwise synthesis of block-type dithiol oligomers radical initiation.

(Table 2, Entry 9): In a three-necked glass flask supplied with thermometer, dropping funnel and magnetic stirrer, were placed 215.6 grams (1.4 mole)of DMDS. The flask was emersed in an oil bath having a temperature between 40-42°C, and then 96.0 grams (0.8 mole) of VNB were added dropwise with a rate such that the temperature of the reaction did not exceed 70°C. After the addition was completed (total addition time was 4 hours), the mixture was stirred until the temperature reached 60°C. The SH group analysis was conducted and showed SHEW of 250. Then 0.100 grams (0.03%) of Vazo 52 radical initiator was added and the mixture was stirred for 4 hours at a temperature of 60°C. To this mixture was added dropwise at the same temperature, 63.2 grams (0.4 mole) of DEGDVE. After the addition was completed (total addition time was 1 hour). The mixture was stirred at this temperature for 1 hour. Then 0.100 grams (0.03%) of Vazo 52 radical initiator was added and the mixture was stirred for 15 hours at a temperature of 60°C. The SH analysis was conducted and showed SHEW of 943 and viscosity at 73°C of 861 cP. The $M_n$ for the oligomeric mixture based on SHEW was measured as 1887. The measured refractive index $n_D$ (at 20°C) was 1.595 and the Abbe number was 42.

The mixture was a clear liquid but it slowly crystallized upon cooling to room temperature.

The polythiol oligomers in Entries 10, 11, 12, 15 and 16 were also prepared according to Method 3 as described above, with the exception that the starting compounds and corresponding molar ratios as shown in Table 2 were used.

EXAMPLE 37 (not an example of the present invention) Synthesis of PTE Dithiol 8 (DMDS/VNB 2:1 mole ratio)

308 grams of DMDS (2 moles) were charged to a glass jar and the contents were heated to a temperature of 60°C. To the jar was slowly added 120 grams of VNB (1 mole) with mixing. The addition rate was adjusted such that the temperature of the mixture did not exceed 70°C. Once the addition of VNB was completed, stirring of the mixture was continued at 60°C, and five 0.04 gram portions of VAZO 52 were added (one portion added once every hour). The mixture was then stirred at a temperature of 60°C for an additional 3 hours, after which time the product was titrated and found to have an SH equivalent weight of 214g/equivalent. The viscosity was 56 cps at 73°C, the refractive index $n_D^{20}$ was 1.605, and the Abbe number was 41.

EXAMPLE 38 (not an example of the present invention) * - Synthesis of PTE Dithiol 9 (DMDS/DIPEB 2:1 mole ratio)

524.6g of DMDS (3.4 moles) was charged to a glass jar, and the contents were heated to a temperature of 60°C. To the jar was slowly added 269 g of DIPEB (1.7 moles) with mixing. Once the addition of DIPEB was completed, the jar was placed in an oven heated to 60°C for 2 hours. The jar was then removed from the oven; 0.1 g VAZO 52 was dissolved into the contents of the jar; and the jar was returned to the oven for a period of 20 hours. The resulting sample was titrated for SH equivalents and was found to have an equivalent weight of 145 g/equivalent. 0.1 g VAZO 52 was dissolved into the reaction mixture, which was then returned to the oven. Over a time period of 8 hours, the reaction mixture was kept in the 60 °C oven, and two more additions of 0.2 g VAZO 52 were made. After 17 hours, the final addition of VAZO 52 (0.2 g) was made, and the resulting sample was titrated, giving an equivalent weight of 238 g/ equivalent. The viscosity of the material at 25°C was 490 cps.

EXAMPLE 39 - Synthesis of PTE Dithiol 10 (2:1 DMDS/DIPEB) /VNB (2:1 mole ratio)

(Table 2, Entry 16): At ambient temperature, 285.6 g of PTE Dithiol 9 (0.6 moles) and 36.1 g VNB (0.3 moles) were charged to a glass jar and mixed. 0.1 g VAZO 52 was dissolved into the mixture, and the jar was subsequently placed in an oven heated to 72°C. After 16.5 hours the mixture was removed from the oven and, the resulting sample was titrated for SH equivalents and had an equivalent weight of 454 g/equivalent.

An additional 0.1 g VAZO 52 was then added to the mixture, and the mixture was returned to the oven for 24 hours. After this time the mixture was removed from the oven and the equivalent weight of the resulting material was titrated and showed 543 g/equivalent. The viscosity at 73°C was 459 cps, the refractive index $n_D^{20}$was 1.614, and the Abbe number was 36.

EXAMPLE 40 - Synthesis of Polythiourethane Prepolymer and Chain Extension

Table 3. Polyurethane prepolymers from dithiol oligomers and their chain extended and cured products.

| Dithiol components | Isocyanates Ratio by weight | Prepolymer SH/NCO eq. ratio, NCO - content(%) | Catalyst, Reaction temperature, Reaction time | Prepolymer $n_D$, Abbe | Prepolymer viscosity cP (73°C) | Chain extension mixture(w/w) Cured product, $n_D$, Abbe,d, Appearance |
|---|---|---|---|---|---|---|
| VCH/AM/ DMDS 2/2/5 $M_n$=1218 (Table 2, Entry 1) | TMXDI / IPDI 3 / 7 | 1 / 4 NCO=12.5% | DBTDL, Polycat 8. No heating 2 hours | 1.554, 43 | 670 | DETDA/ DMDS-2.8/1 1.581,39, d=1.160 Clear |
| VNB/AM/ DMDS 3 / 2 / 6 $M_n$=1529 (Table 2, Entry 5) | TMXDI / IPDI 1 / 2 | 1 / 4 NCO=9.82% | No catalyst 50°C, 16 hrs. | 1.566, 43 | 1404 | DETDA/ DMDS= 2.8/1 1.589, 39 d=1.173 Clear |
| VNB/AM/ DMDS 3 / 2 / 6 $M_n$=1529 (Table 2, Entry 5) | Des W | 1 / 4 NCO=9.46% | No catalyst 50°C, 16 hrs. | 1.564, 46 | 1596 | DETDA/ DMDS= 2.9/1 1.584, 43 d=1.162 Hazy |
| VNB/ DEGDVE/ DMDS 4 / 2 / 7 $M_n$=1888, (Table 2, Entry 7) | TMXDI / IPDI 1 / 2 | 1 / 4 NCO=8.72% | Polycat 8 No heating 2 hours | 1.567, 43 | 910 | DETDA/ DMDS= 2.8/1 1.590, 39 d=1.181 Clear |
| VNB/ DEGDVE/ DMDS 4 / 2 / 7 $M_n$=1888 (Table 2, Entry 7) | TMXDI / IPDI 1 / 2 | 1 / 4 NCO=8.72% | Polycat 8 No heating 2 hours | 1.567, 43 | 910 | DETDA only 1.584, 40 d=1.159 Clear |
| VNB/ DEGDVE/ DMDS 4 / 2 / 7 $M_n$=1888 (Table 2, Entry 7) | TMXDI / IPDI 1 / 2 | 1 / 4 NCO=8.72% | Polycat 8 No heating 2 hours | 1.567, 43 | 910 | DETDA/ DMDS= 28/1 1.588, 40 d=1.171 Clear |
| VNB/ DEGDVE/ DMDS 2.33 / 1.28 / 4.65 $M_n$=1308 (Tasble 2 Entry 12) | Des W | 1 / 4.4 NCO=) 11.71% | Polycat 8 65-70°C 12 hours | 1.559, 46 | 888 | DETDA/HITT I / 1.35 1.594, 41 Clear >13.3 J at CT 1 mm*. |

(continued)

| Dithiol components | Isocyanates Ratio by weight | Prepolymer SH/NCO eq. ratio, NCO - content(%) | Catalyst, Reaction temperature, Reaction time | Prepolymer $n_D$, Abbe | Prepolymer viscosity cP (73°C) | Chain extension mixture(w/w) Cured product, $n_D$, Abbe,d, Appearance |
|---|---|---|---|---|---|---|
| VNB/ DEGDVE/ DMDS 2 / 1 / 4 $M_n$=1002 (Table 2 Entry 11) | Des W | 1 / 3.75 NCO=11.78% | Polycat 8 70°C 12 hours | 1.561, 46 | 1175 | DETDA/ DT $M_{n=}$1000 1 / 1.12 1.584, 41 Clear≥13.3 J at CT 1 mm* |
| DIPEB/ DEGDVE/ DMDS 2 / 1 / 4.25 $M_n$=904 (Table 2 Entry 13) | Des W | 1 / 4.0 NCO=12.66% | Polycat 8 70°C 12 hours | 1.559, 44 | 719 | DETDA/HITT 1 / 1.40 1.592, 39 Clear≥13.3 J at CT 1 mm* |
| DIPEB/VNB/ DMDS 2 / 1 / 4 $M_n$=1086 (Table 2 Entry 16) | Des W | 1 / 4.2 NCO = 11.90% | Polycat 8 70°C 2 hours | 1.560,44 | 1363 | DETDA/ DIPEB. 2DMDS 1/1.52 Clear 1.598, 38 ≥13.3 J at CT 1 mm* |
| DIPEB/VNB/ DMDS 2 / 1 /4 $M_n$=1086 (Table 2 Entry 16) | Des W / IPDI = 9/1 (by weight) | 1 / 4.4 NCO=12.30% | Polycat 8 65°C 2 hours | 1.560,43 | 1173 | DETDA/ DIPEB. 2DMDS 1/1.52 Clear 1.597, 38 ≥13.3 J at CT 1 mm* |

DIPEP.2DMDS refers to dithiol oligomer prepared with 2 eq. Of DMDS with 1 eq. Of DIPEB
Des W - 4,4-dicyclohexylmethane diisocyanate (from Bayer, USA)
IPDI - 3-isocyanato-methyl-3,5,5-trimethyl cyclohexyl-isocyanate (from Degussa, Germany)
TMXDI - 1.3-bis(1-isocyanato-1-methylethyl)benzene ( from Cytec, USA)
DETDA - 2,4-diamino-3,5-diethyl-toluene, 2,6-diamino-3,5-diethyl-toluene and mixtures thereof (collectively "diethyltoluenediamine" or "DETDA") , which is commercially available from Albemarle Corporation under the trade name Ethacure 100
DBTDL - dibutyltin dilaurate (obtained from Aldrich)
Polycat 8 - N,N-dimethylcyclohexylamine (from Air Products, USA)
d density in g/$cm^3$
DT $M_n$=1000 This is the dithiol oligomer described in (Table 2, Entry 11)
HITT is trithiol synthesized as described in Example 41.

The above Table 3 refers to the following ball sizes used and the corresponding impact energy.

| Ball weight, kg | Impact Energy, J |
|---|---|
| 0.016 | 0.20 |
| 0.022 | 0.27 |
| 0.032 | 0.40 |
| 0.045 | 0.56 |
| 0.054 | 0.68 |
| 0.067 | 0.83 |

(continued)

| Ball weight, kg | Impact Energy, J |
|---|---|
| 0.080 | 1.00 |
| 0.094 | 1.17 |
| 0.110 | 1.37 |
| 0.129 | 1.60 |
| 0.149 | 1.85 |
| 0.171 | 2.13 |
| 0.198 | 2.47 |
| 0.223 | 2.77 |
| 0.255 | 3.17 |
| 0.286 | 3.56 |
| 0.321 | 3.99 |
| 0.358 | 4.46 |
| 0.398 | 4.95 |
| 1.066 | 13.30 |

The isocyanate and the dithiol components shown in Table 3 in the molar ratios shown in Table 3 were mixed at room temperature under a nitrogen atmosphere. The catalyst identified in Table 3 was then added and the mixture was stirred at the temperature and for the period of time specified in Table 3. The SH group analysis was performed for monitoring the progress of the reaction. The reaction was considered completed when the SH groups analysis showed substantially no SH group present in the reaction mixture. The properties of the prepolymer including NCO content (%), viscosity at 73°C (cP) and refractive index (d-line) were measured and are shown in Table 3.

Wherein the prepolymer was chain extended with diamine and polythiol, the prepolymer was degassed under vacuum at a temperature of 60°C for two hours and diamine and polythiol were mixed and degassed under vacuum at room temperature for 2 hours. The weight ratio of diamine/polythiol was as shown in Table 3 for each experiment. The molar ratio ($NH_2$+SH) /NCO was in all cases 0.95. The two mixtures were then mixed together at a temperature of 60°C and charged between a preheated glass plates mold. The material was cured in a preheated oven at a temperature of 130°C for 16 hours. The cured material had the appearance, refractive index, density and impact resistence as shown in Table 3.

Example 41 - Synthesis of HITT (Formula (IV'm))

HITT material identified in Table 3 was prepared according to the following procedure. 1,2,4-trivinylcyclohexane (43.64 g, 0.269 mol)and DMDS (124.4 g, 0.808 mol) were mixed at room temperature. The mixture was heated to a temperature of 60°C and maintained at this temperature for 1 hour. 50 mg Vazo 64 radical initiator obtained from DuPont was then added and the mixture was stirred for 16 hours at 60°C. The addition of 50 mg Vazo 64 radical initiator and subsequent heating for 16 hours at 60°C was conducted two additional times. SH titration analysis of the mixture was conducted and showed SHEW=222. This analysis showed essentially the same value after one more cycle of catalyst addition and heating at 60 °C for 16 hours. The product was clear liquid having viscosity of 85 cP (73°C), refractive index $n_d$ of 1.606, Abbe of 39, refractive index $n_e$ of of 1.610, and Abbe of 39. MS(Electrospray) showed signal at m/e 647 ($M^+$ + Na) .

## Claims

**1.** A sulfur-containing polyureaurethane prepared by the reaction of:

(a) a sulfur-containing polyurethane prepolymer; and
(b) an amine-containing curing agent,

the sulfur-containing polyureaurethane having a refractive index of at least 1.57, an Abbe number of at least 32 and a density of less than 1.3 grams/$cm^3$, when at least partially cured, wherein the sulfur-containing polyurethane prepolymer comprises the reaction product of:

(a) a polyisocyanate, polyisothiocyanate, or mixture thereof; and
(b) an active hydrogen-containing material selected from polythiol and mixture of polyol and polythiol,

wherein said polythiol comprises an oligomer which is the reaction product of at least two different dienes and at least one dithiol and wherein the stoichiometric ratio of the sum of the number of equivalents of dithiol to the sum of the number of equivalents of diene is greater than 1.0 : 1.0.

**2.** The sulfur-containing polyureaurethane of claim 1, wherein said prepolymer has a polyisocyanate plus polyisothiocyanate to hydroxyl equivalent ratio of from 2.0 : 1.0 to less than 5.5 : 1.0.

**3.** The sulfur-containing polyureaurethane of claim 1 wherein said polyol comprises a polyether polyol.

**4.** The sulfur-containing polyureaurethane of claim 1 wherein said sulfur-containing polyurethane prepolymer and said amine-containing curing agent are present such that the equivalent ratio of (NH + SH + OH) to (NCO + NCS) is from 0.80 : 1.0 to 1.1 : 1.0.

**5.** The sulfur-containing polyureaurethane of claim 1, wherein said polyisocyanate is selected from 4,4'-methylenebis (cyclohexyl isocyanate) and isomeric mixtures thereof.

**6.** The sulfur-containing polyureaurethane of claim 1, wherein said polythiol comprises an oligomer which is the reaction product of at least two different dienes and at least one dithiol and at least one trifunctional or higher-functional polythiol; and wherein the stoichiometric ratio of the sum of the number of equivalents of polythiol to the sum of the number of equivalents of diene is greater than 1.0 : 1.0.

**7.** The sulfur-containing polyureaurethane of claim 1 wherein said amine-containing curing agent comprises a polyamine having at least two functional groups independently chosen from primary amine ($-NH_2$), secondary amine (-NH-), or combinations thereof.

**8.** The sulfur-containing polyureaurethane of claim 1, wherein said polyamine is represented by the following structural formula and mixtures thereof:

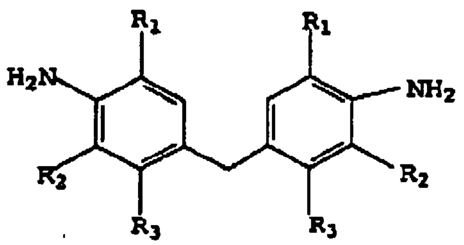

wherein $R_1$ and $R_2$ are each independently methyl, ethyl, propyl, or isopropyl groups, and each $R_3$ independently is hydrogen or chloride.

**9.** The sulfur-containing polyureaurethane of claim 1 wherein said amine-containing curing agent comprises 4.4'-methylenebis(3-chloro-2,6-diethylaniline), 2,4-diamino-3,5-diethyl-toluene; and/or 2,6-diamino-3,5-diethyl-toluene.

**10.** A method of preparing a sulfur-containing polyureaurethane comprising:

(a) reacting polyisocyanate with sulfur-containing active hydrogen-containing material, said sulfur-containing active hydrogen-containing material selected from polythiol and mixture of polyol and polythiol, wherein said polythiol comprises an oligomer which is the reaction product of at least two different dienes and at least one dithiol and wherein the stoichiometric ratio of the sum of the number of equivalents of dithiol to the sum of the number of equivalents of diene is greater than 1.0 : 1.0 to form polyurethane prepolymer; and
(b) reacting said polyurethane prepolymer with amine-containing curing agent,

wherein the polyueaurethane has a refractive index of at least 1.57, an Abbe number of at least 32 and a density of less than 1.3 grams/$cm^3$.

**11.** An optical article comprising the sulfur-containing polyureaurethane of claim 1.

**12.** The optical article of claim 11 being an ophthalmic lens.

**13.** The optical article of claim 11 comprising at least a photochromic amount of photochromic substance.

## Patentansprüche

**1.** Schwefelhaltiges Polyharnstoffurethan hergestellt durch die Reaktion von:

(a) einem schwefelhaltigen Polyurethanprepolymer und
(b) einem aminhaltigen Härtungsmittel,

wobei das schwefelhaltige Polyharnstoffurethan einen Brechungsindex von wenigstens 1,57, eine Abbe-Zahl von wenigstens 32 und eine Dichte von weniger als 1,3 g/cm$^3$, wenn zumindest teilweise gehärtet, aufweist, wobei das schwefelhaltige Polyurethanprepolymer das Reaktionsprodukt von:

(a) einem Polyisocyanat, einem Polyisothiocyanat oder Mischung davon und
(b) einem aktiven Wasserstoff enthaltenden Material, ausgewählt aus Polythiol und Mischung aus Polyol und Polythiol,

enthält,
wobei dieses Polythiol ein Oligomer enthält, das das Reaktionsprodukt von wenigstens zwei unterschiedlichen Dienen und wenigstens einem Dithiol ist, und wobei das stöchiometrische Verhältnis der Summe der Anzahl der Äquivalente von Dithiol zu der Summe der Anzahl der Äquivalente von Dien größer als 1,0 : 1,0 ist.

**2.** Schwefelhaltiges Polyharnstoffurethan nach Anspruch 1, wobei dieses Prepolymer ein Polyisocyanat-plus-Polyisothiocyanat-zu-Hydroxyl-Aquivalentverhältnis von 2,0 : 1,0 bis kleiner als 5,5 : 1,0 aufweist.

**3.** Schwefelhaltiges Polyharnstoffurethan nach Anspruch 1, wobei dieses Polyol ein Polyetherpolyol enthält.

**4.** Schwefelhaltiges Polyharnstoffurethan nach Anspruch 1, wobei dieses schwefelhaltige Polyurethanprepolymer und dieses aminhaltige Härtungsmittel vorhanden sind, so dass das Äquivalentverhältnis von (NH + SH + OH) zu (NCO + NCS) von 0,80 : 1,0 bis 1,1 : 1,0 ist.

**5.** Schwefelhaltiges Polyharnstoffurethan nach Anspruch 1, wobei dieses Polyisocyanat aus 4,4'-Methylenbis(cyclohexylisocyanat) und isomeren Mischungen davon ausgewählt ist.

**6.** Schwefelhaltiges Polyharnstoffurethan nach Anspruch 1, wobei dieses Polythiol ein Oligomer enthält, das das Reaktionsprodukt von wenigstens zwei unterschiedlichen Dienen und wenigstens einem Dithiol und wenigstens einem trifunktionalen oder höherfunktionalen Polythiol ist, und wobei das stöchiometrische Verhältnis der Summe der Anzahl der Äquivalente von Polythiol zu der Summe der Anzahl der Äquivalente von Dien größer als 1,0 : 1,0 ist.

**7.** Schwefelhaltiges Polyharnstoffurethan nach Anspruch 1, wobei dieses aminhaltige Härtungsmittel ein Polyamin mit wenigstens zwei funktionellen Gruppen enthält, die unabhängig voneinander ausgewählt sind aus primärem Amin ($-NH_2$), sekundärem Amin (-NH-) oder Kombinationen davon.

**8.** Schwefelhaltiges Polyharnstoffurethan nach Anspruch 1, wobei dieses Polyamin durch die folgende Strukturformel und Mischungen davon wiedergegeben ist:

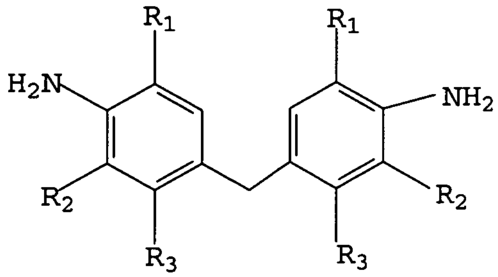

worin $R_1$ und $R_2$ jeweils unabhängig Methyl-, Ethyl-, Propyl- oder Isopropylgruppen sind und jedes $R_3$ unabhängig Wasserstoff oder Chlor ist.

**9.** Schwefelhaltiges Polyharnstoffurethan nach Anspruch 1, wobei dieses aminhaltige Härtungsmittel 4,4'-Methylenbis (3-chlor-2,6-diethylanilin), 2,4-Diamino-3,5-diethyltoluol und/oder 2,6-Diamino-3,5-diethyltoluol enthält.

**10.** Verfahren zur Herstellung eines schwefelhaltigen Polyharnstoffurethans umfassend:

(a) Umsetzen von Polyisocyanat mit schwefelhaltigem aktiven Wasserstoff enthaltendem Material, wobei dieses schwefelhaltige aktiven Wasserstoff enthaltende Material ausgewählt ist aus Polythiol und Mischung von Polyol und Polythiol, wobei dieses Polythiol ein Oligomer enthält, das das Reaktionsprodukt von wenigstens zwei unterschiedlichen Dienen und wenigstens einem Dithiol ist und wobei das stöchiometrische Verhältnis der Summe der Anzahl der Äquivalente von Dithiol zu der Summe der Anzahl der Äquivalente von Dien größer als 1,0 : 1,0 ist, um ein Polyurethanprepolymer zu bilden, und
(b) Umsetzen dieses Polyurethanprepolymers mit einem aminhaltigen Härtungsmittel,

wobei das Polyharnstoffurethan einen Brechungsindex von wenigstens 1,57, eine Abbe-Zahl von wenigstens 32 und eine Dichte von weniger als 1,3 g/$cm^3$ aufweist.

**11.** Optischer Gegenstand enthaltend das schwefelhaltige Polyharnstoffurethan nach Anspruch 1.

**12.** Optischer Gegenstand nach Anspruch 11, der eine Augenlinse ist.

**13.** Optischer Gegenstand nach Anspruch 11, der wenigstens eine photochrome Menge einer photochromen Substanz enthält.

## Revendications

**1.** Poly(urée uréthane) contenant du soufre préparé par la réaction :

(a) d'un prépolymère poly(uréthane) contenant du soufre ; et
(b) d'un agent de durcissement contenant une amine,

le poly(urée uréthane) contenant du soufre ayant un indice de réfraction d'au moins 1,57, un nombre d'Abbe d'au moins 32 et une masse volumique inférieure à 1,3 gramme/$cm^3$, lorsqu'il est au moins partiellement durci, dans lequel le prépolymère poly(uréthane) contenant du soufre comprend le produit de réaction :

(a) d'un poly(isocyanate), d'un poly(isothiocyanate) ou d'un mélange de ceux-ci ; et
(b) d'un matériau contenant de l'hydrogène actif choisi parmi le poly(thiol) et un mélange de polyol et de poly(thiol),

dans lequel ledit poly(thiol) comprend un oligomère qui est le produit de réaction d'au moins deux diènes différents et d'au moins un dithiol et dans lequel le rapport stoechiométrique entre la somme du nombre d'équivalents de dithiol et la somme du nombre d'équivalents de diène est supérieur à 1,0 : 1,0.

**2.** Poly(urée uréthane) contenant du soufre selon la revendication 1, dans lequel ledit prépolymère a un rapport équivalent entre le poly(isocyanate) plus le poly(isothiocyanate) et l'hydroxyle de 2,0 : 1,0 à moins de 5,5 : 1,0.

3. Poly(urée uréthane) contenant du soufre selon la revendication 1, dans lequel ledit polyol comprend un poly(éther) polyol.

4. Poly(urée uréthane) contenant du soufre selon la revendication 1, dans lequel le prépolymère poly(uréthane) contenant du soufre et ledit agent de durcissement contenant une amine sont présents de sorte que le rapport équivalent entre (NH + SH + OH) et (NCO + NCS) est de 0,80 : 1,0 à 1,1 : 1,0.

5. Poly(urée uréthane) contenant du soufre selon la revendication 1, dans lequel ledit poly(isocyanate) est choisi parmi le 4,4'-méthylènebis(cyclohexylisocyanate) et des mélanges isomériques de celui-ci.

6. Poly(urée uréthane) contenant du soufre selon la revendication 1, dans lequel ledit poly(thiol) comprend un oligomère qui est le produit de réaction d'au moins deux diènes différents et d'au moins un dithiol et d'au moins un poly(thiol) trifonctionnel ou à fonctionnalité supérieure ; et dans lequel le rapport stoechiométrique entre la somme du nombre d'équivalents de poly(thiol) et la somme du nombre d'équivalents de diène est supérieur à 1,0 : 1,0.

7. Poly(urée uréthane) contenant du soufre selon la revendication 1, dans lequel ledit agent de durcissement contenant une amine comprend une poly(amine) ayant au moins deux groupes fonctionnels indépendamment choisis parmi une amine primaire (-$NH_2$), une amine secondaire (-NH-), ou des combinaisons de celles-ci.

8. Poly(urée uréthane) contenant du soufre selon la revendication 1, dans lequel ladite poly(amine) est représentée par la formule structurelle suivante et des mélanges de celle-ci :

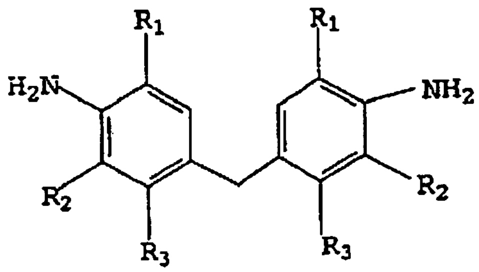

dans laquelle $R_1$ et $R_2$ sont chacun indépendamment des groupes méthyle, éthyle, propyle ou isopropyle, et chaque $R_3$ est indépendamment un atome d'hydrogène ou de chlore.

9. Poly(urée uréthane) contenant du soufre selon la revendication 1, dans lequel ledit agent de durcissement contenant une amine comprend la 4,4'-méthylènebis(3-chloro-2,6-diéthylaniline), le 2,4-diamino-3,5-diéthyl-toluène ; et/ou le 2,6-diamino-3,5-diéthyl-toluène.

10. Procédé de préparation d'un poly(urée uréthane) contenant du soufre comprenant :

(a) la réaction d'un poly(isocyanate) avec un matériau contenant de l'hydrogène actif contenant du soufre, ledit matériau contenant de l'hydrogène actif contenant du soufre étant choisi parmi le poly(thiol) et un mélange de polyol et de poly(thiol), dans lequel ledit poly(thiol) comprend un oligomère qui est le produit de réaction d'au moins deux diènes différents et d'au moins un dithiol et dans lequel le rapport stoechiométrique entre la somme du nombre d'équivalents de dithiol et la somme du nombre d'équivalents de diène est supérieur à 1,0 : 1,0 pour former un prépolymère poly(uréthane) ; et
(b) la réaction dudit prépolymère de poly(uréthane) avec un agent de durcissement contenant une amine,

dans lequel le poly(urée uréthane) a un indice de réfraction d'au moins 1,57, un nombre d'Abbe d'au moins 32 et une masse volumique inférieure à 1,3 gramme/$cm^3$.

11. Article optique comprenant le poly(urée uréthane) contenant du soufre de la revendication 1.

12. Article optique selon la revendication 11, qui est une lentille ophtalmique.

13. Article optique selon la revendication 11, comprenant au moins une quantité photochromique de substance photochromique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004060951 A1
- US 5225472 A
- US 5693738 A
- US 4166043 A
- US 4367170 A
- US 4931220 A


### Non-patent literature cited in the description


- Ullmann's Encyclopedia of Industrial Chemistry. 1992, vol. A21, 673-674